(19) Europäisches Patentamt
European Patent Office
Office européen des brevets

(11)  **EP 3 339 358 B1**

(12)  **EUROPEAN PATENT SPECIFICATION**

(45) Date of publication and mention
of the grant of the patent:
**02.12.2020   Bulletin 2020/49**

(51) Int Cl.:
*C08J 9/18* (2006.01)        *C08L 23/04* (2006.01)
*C08L 23/10* (2006.01)

(21) Application number: **16837113.6**

(86) International application number:
**PCT/JP2016/073925**

(22) Date of filing: **16.08.2016**

(87) International publication number:
**WO 2017/030124 (23.02.2017 Gazette 2017/08)**

(54) **POLYPROPYLENE RESIN FOAMED PARTICLES, METHOD FOR PRODUCING POLYPROPYLENE RESIN FOAMED PARTICLES AND POLYPROPYLENE RESIN IN-MOLD FOAM-MOLDED ARTICLE**

GESCHÄUMTE POLYPROPYLENHARZPARTIKEL, VERFAHREN ZUR HERSTELLUNG VON GESCHÄUMTEN POLYPROPYLENHARZPARTIKELN UND IN EINER FORM GESCHÄUMTES POLYPROPYLENHARZFORMTEIL

PARTICULES DE MOUSSE EN RÉSINE À BASE DE POLYPROPYLÈNE, PROCÉDÉ DE FABRICATION DE CELLES-CI ET ARTICLE MOULÉ DANS LE MOULE EN MOUSSE DE RÉSINE À BASE DE POLYPROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **20.08.2015   JP 2015162376**

(43) Date of publication of application:
**27.06.2018   Bulletin 2018/26**

(73) Proprietor: **Kaneka Corporation**
**Osaka-shi, Osaka 530-8288 (JP)**

(72) Inventors:
• **FUKUZAWA, Jun**
**Settsu-shi**
**Osaka 566-0072 (JP)**

• **MIURA, Shintaro**
**Settsu-shi**
**Osaka 566-0072 (JP)**

(74) Representative: **Vossius & Partner**
**Patentanwälte Rechtsanwälte mbB**
**Siebertstrasse 3**
**81675 München (DE)**

(56) References cited:
WO-A1-2015/098619        WO-A1-2015/098619
JP-A- 2009 167 236        JP-A- 2009 167 236

**Description**

Technical Field

The present invention relates to expanded polypropylene resin particles, a method for producing expanded polypropylene resin particles, and a polypropylene resin in-mold expanded molded product.

Background Art

Polypropylene resin in-mold expanded molded products, which are obtained from expanded polypropylene resin particles composed of a polypropylene resin, have been used in various applications such as not only car interior materials and car bumper core materials but also heat insulators, shock-absorbing packing materials, and returnable containers. Especially in car applications in recent years, the cars are becoming more lightweight under environmental concerns, and therefore the following method has been used: a method of achieving the weight reduction of the cars while maintaining the strength equivalent to those of existing cars, by using a high-strength polypropylene resin in-mold expanded molded product in a car interior material, a car bumper core, and/or the like.

Generally, in order to obtain a high-strength polypropylene resin in-mold expanded molded product, it is preferable to select a polypropylene resin that has high flexural modulus. Polypropylene resins having high flexural modulus tend to have a high degree of resin crystallinity and high melting point, and their crystal heat capacity tends to be large.

However, expanded particles obtained from a high-strength polypropylene resin tend to have fine cell diameter, which results in a tendency to impair the surface properties of the in-mold expanded molded product.

Meanwhile, an in-mold expanded molded product with higher expansion ratio has poorer surface properties. In the case of high expansion ratio, the in-mold expanded molded product has a poor surface appearance as described below: the in-mold expanded molded product is likely to have an uneven (i.e., the surface is dented in areas between expanded particles) and wrinkled surface; mold transferability is poor at an edge (ridge) where faces of the in-mold expanded molded product meet and thus the edge is not smooth and the shapes of expanded particles are noticeable; or the like. Furthermore, in some cases, the in-mold expanded molded product may shrink, which may lead to reduced dimensional accuracy.

There is a known method of improving surface properties to avoid the above-described issues. The method includes adding, to a polypropylene resin, a polyethylene wax having a molecular weight of 1000 to 4000 and a melting point of 100°C or above and 130°C or below (for example, Patent Literature 1). However, this method has an issue in that, due to the low strength of the polyethylene wax, the mechanical strength of the in-mold expanded molded product decreases and the molding cycle in in-mold foaming molding becomes long and productivity decreases.

There is another known method of improving surface properties by adding, to a polypropylene resin, a polyolefin oligomer having a molecular weight of 1500 to 25000 (for example, Patent Literature 2). However, this method has an issue in that, due to the low strength of the polyolefin oligomer, the strength of the in-mold expanded molded product decreases and the molding cycle in in-mold foaming molding becomes long and productivity decreases.

The following method is also known: a method of attempting to improve surface properties by adding a linear low-density polyethylene to a polypropylene resin (for example, Patent Literature 3). However, this method has an issue in that the mechanical strength of the in-mold expanded molded product decreases due to the low strength of the linear low-density polyethylene.

In regard to another object, the following method is known: a method of attempting to obtain expanded particles with cells uniform in size by adding, to 50 to 99 weight% of a polypropylene resin, 1 to 50 weight% of a polyethylene resin having a density of 0.92 to 0.97 g/cm$^3$, a melt flow rate of 1 to 20 g/10min., and specific melting characteristics (for example Patent Literature 4). Examples of a volatile foaming agent disclosed in Patent Literature 4 are all organic foaming agents that have a high global warming potential, and Patent Literature 4 is totally silent about the use of an inorganic gas. Organic foaming agents have an issue in that they impose significant environmental loads. In addition, there is a drawback that the organic foaming agents require explosion-proof facilities and thus the facility becomes costly. Furthermore, Patent Literature 4 discloses, in Examples 1 and 2 and Comparative Examples 3 and 4, the cell diameters obtained when the amount of polyethylene added to the polypropylene resin is increased. Patent Literature 4 states that, when polyethylene is added in an amount as small as 0.1 weight%, the resulting cell diameter is as huge as 690 $\mu$m and this deteriorates fusibility etc. of the in-mold expanded molded product. When polyethylene is added in an amount as large as 20 to 30 weight%, the resulting cell diameter is relatively large: 360 to 320 $\mu$m. When polyethylene is added in an amount of 52 weight% which is about half the resin weight, the resulting cell diameter is about 250 $\mu$m. The in-mold expanded molded product having a cell diameter of 250 $\mu$m has an issue in that it has a reduced strength.

In regard to still another object, the following method is known: a method of attempting to obtain expanded particles with large cell diameter by adding two or more inorganic antiblocking agents in an amount of 0.03 parts by weight or more and 2 parts by weight or less in total to 100 parts by weight of a polyolefin resin. This is for the purpose of making use of the polyolefin resin, which is generally for use in films, for in-mold foaming molding (for example, Patent Literature 5).

Patent Literature 6 discloses a method to prepare an expanded particle from a foamable composition comprising polypropylene resin having a melt index of 8 to 25 g/10 min, 0.01-5 weight part of a hydrophilic compound, and 0.005-1 weight part of a nucleating agent. The particles obtained have an expansion ratio of 30 times, an average cell diameter of 230 and 240 $\mu$m and an open cell rate of 0.7 and 0.6%.

Citation List

[Patent Literature]

[Patent Literature 1]
Japanese Patent Application Publication Tokukai No. 2009-114359 (Publication date: May 28, 2009)
[Patent Literature 2]
Japanese Patent Application Publication Tokukai No. 2009-084547 (Publication date: April 23, 2009)
[Patent Literature 3]
Japanese Patent Application Publication Tokukai No. 2008-255286 (Publication date: October 23, 2008)
[Patent Literature 4]
Japanese Patent Application Publication Tokukai No. 2010-275499 (Publication date: December 9, 2010)
[Patent Literature 5]
PCT International Publication No. WO2015/098619 (Publication Date: July 2, 2015)
[Patent Literature 6]
JP 2009-167236 (Publication Date: July 30, 2009)

Summary of Invention

Technical Problem

In order to solve the issue of surface property deterioration of a molded product that would occur when it is obtained from a high-melting, high-elastic-modulus polypropylene resin through in-mold foaming molding, it is an object of an embodiment of the present invention to provide expanded polypropylene resin particles that can achieve good surface appearance and short molding cycle in in-mold foaming molding while maintaining good compressive strength characteristics which are characteristic to the high-modulus polypropylene resin. Solution to Problem

The inventors studied hard to obtain the above expanded polypropylene resin particles, and found that expanded polypropylene resin particles obtained from a polypropylene resin having a specific configuration would give a high-strength in-mold expanded molded product that is good in surface appearance and that achieves short molding cycle in in-mold foaming molding. On the basis of this finding, the inventors accomplished the present invention.

Specifically, one embodiment of the present invention is directed to an expanded polypropylene resin particle containing a polypropylene resin (X) as a base resin, the polypropylene resin (X) containing a polypropylene resin (I) in an amount of 85 to 99 weight% and a high density polyethylene resin (II) in an amount of 1 to 15 weight% so that the total amount of the polypropylene resin (I) and the high density polyethylene resin (II) is 100 weight%, and the polypropylene resin (I) having a melt flow rate of 3 g/10min. or more and 20 g/10 min. or less and a melting point of 148°C or above and 160°C or below, and the high density polyethylene resin (II) having a density of 0.93 to 0.97 g/cm$^3$ and a melt flow rate of 0.1 g/10min. or more and 15 g/10min. or less, wherein no or one foam nucleating agent is contained in the polypropylene resin (X), wherein a hydrophilic compound is contained in the polypropylene resin (X), and wherein the expanded polypropylene resin particle has an expansion ratio of 10 times or greater and 40 times or less, an average cell diameter of 100 $\mu$m or greater and 250 $\mu$m or less, and an open cell ratio of 0% or greater and 10% or less.

Another embodiment of the present invention is directed to a method for producing expanded polypropylene resin particles containing a polypropylene resin (X) as a base resin, the polypropylene resin (X) containing a polypropylene resin (I) in an amount of 85 to 99 weight% and a high density polyethylene resin (II) in an amount of 1 to 15 weight% so that the total amount of the polypropylene resin (I) and the high density polyethylene resin (II) is 100 weight%, and the polypropylene resin (I) having a melt flow rate of 3 g/10min. or more and 20 g/10mm. or less and a melting point of 148°C or above and 160°C or below, and the high density polyethylene resin (II) having a density of 0.93 to 0.97 g/cm$^3$ and a melt flow rate of 0.1 g/10min. or more and 15 g/10min. or less, wherein no or one foam nucleating agent is contained in the polypropylene resin (X), wherein a hydrophilic compound is contained in the polypropylene resin (X), and wherein the expanded polypropylene resin particles have an expansion ratio of 10 times or greater and 40 times or less, an average cell diameter of 100 μm or greater and 250 μm or less, and an open cell ratio of 0% or greater and 10% or less, the method including: obtaining a dispersion slurry by placing water, an inorganic gas-based foaming agent, and polypropylene resin particles composed of the polypropylene resin (X) in a pressure-resistant container and dispersing the polypropylene resin particles with stirring, and increasing temperature and pressure; and thereafter releasing the dispersion slurry from the pressure-resistant container to a region having a pressure lower than the internal pressure of the pressure-resistant container to expand the polypropylene resin particles.

Disclosed herein is

a method for producing a polypropylene resin in-mold expanded molded product from an expanded polypropylene resin particle as described herein,

wherein a molding cycle is 5 to 20% shorter than a molding cycle of a method for producing a polypropylene resin in-mold expanded molded product from expanded polypropylene resin particles that contain, as a base resin, a polypropylene resin composed of the polypropylene resin (I) alone.

A further embodiment of the present invention is directed to a polypropylene resin in-mold expanded molded product obtained from an expanded polypropylene resin particle in accordance with one embodiment of the present invention, the polypropylene resin in-mold expanded molded product having a density of 10 g/L or greater and 60 g/L or less and an open cell ratio of 0 to 10%.

Advantageous Effects of Invention

When expanded polypropylene resin particles of one embodiment of the present invention are molded through in-mold foaming, a polypropylene in-mold expanded molded product having an improved surface appearance and a high strength is obtained with a short molding cycle even if the amount of the polyethylene resin added is small. Since a high-strength in-mold expanded molded product is obtained, the weight reduction of the molded product can be achieved while keeping the compressive strength necessary for structural components satisfied.

Brief Description of Drawings

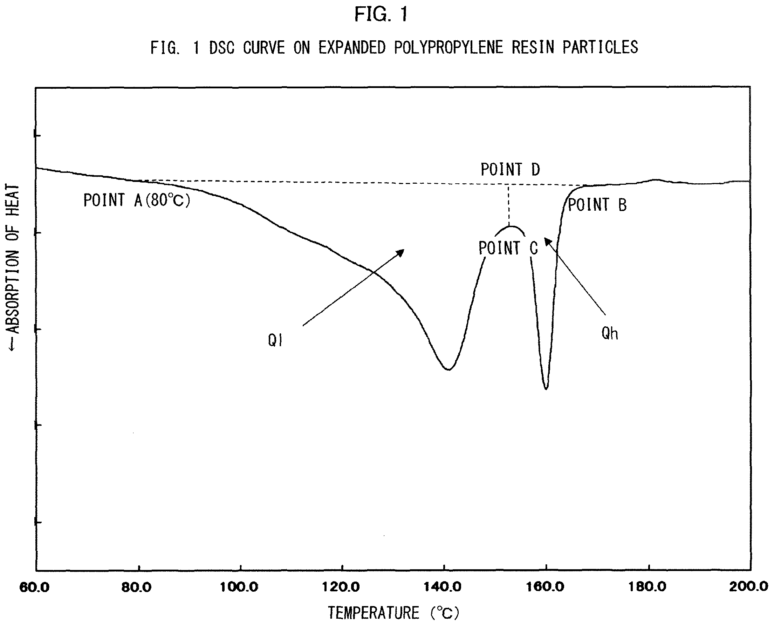

Fig. 1 shows one example of a DSC curve (temperature vs heat absorption quantity) obtained by differential scanning calorimetry (DSC) in which the temperature of expanded polypropylene resin particles in accordance with one embodiment of the present invention is raised from 40°C to 220°C at a heating rate of 10 °C/min. Fig. 1 shows a case in which the base resin consists only of one polypropylene resin and contains no polyethylene resins. The DSC curve shows two melting peaks and has two melting heat quantity regions: the low-temperature-side melting heat quantity region Ql; and the high-temperature-side melting heat quantity region Qh.

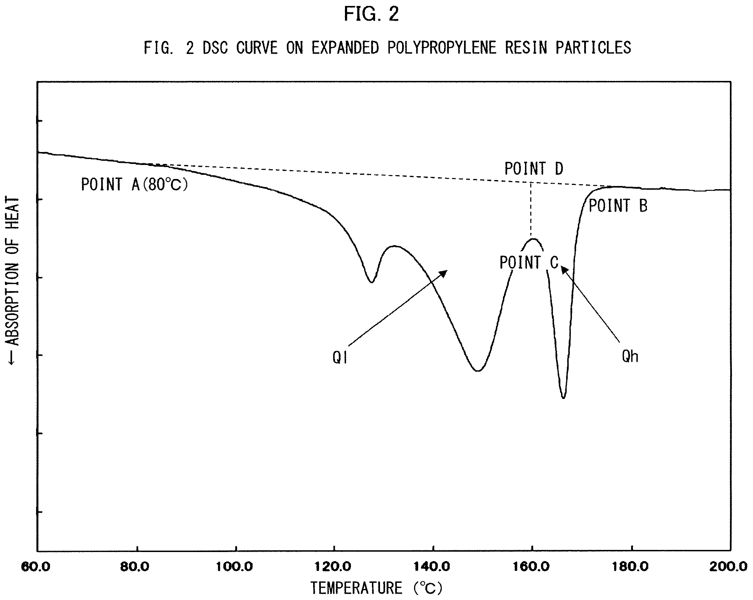

Fig. 2 shows one example of a DSC curve (temperature vs heat absorption quantity) obtained by differential scanning calorimetry (DSC) in which the temperature of expanded polypropylene resin particles in accordance with one embodiment of the present invention is raised from 40°C to 220°C at a heating rate of 10 °C/min. Fig. 2 shows a case in which the base resin is a mixture of a polypropylene resin and a polyethylene resin (hereinafter may be referred to as PE). The DSC curve may have the third peak resulting from PE at around 125°C to 130°C as compared with Fig. 1, depending on the amount of PE. In a case where three melting peaks appear, there are two points that can serve as the smallest heat absorption quantity between two adjacent melting heat quantity regions. In such a case, the point at the high-temperature side is defined as point C. Based on point C, the low-temperature-side melting heat quantity region Ql and the high-temperature-side melting heat quantity region Qh are calculated.

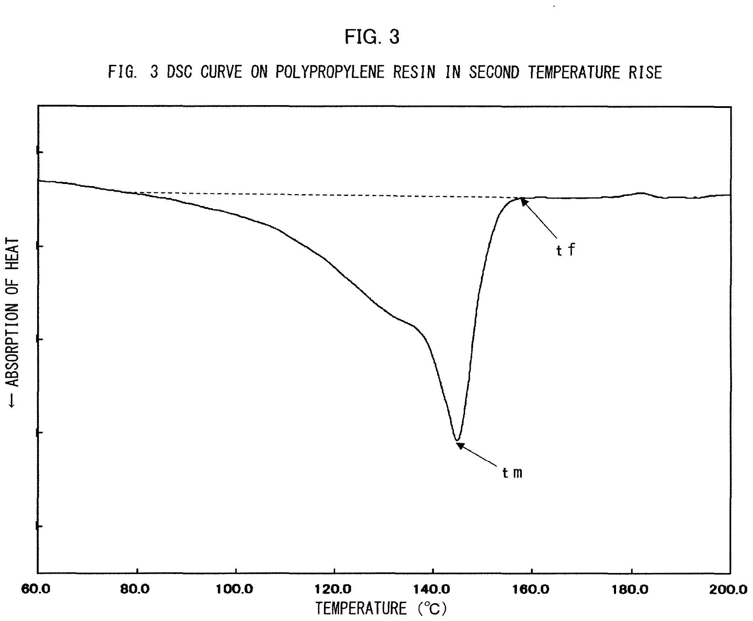

Fig. 3 shows one example of a DSC curve obtained when a base resin of expanded polypropylene resin particles in accordance with one embodiment of the present invention is heated from 40°C to 220°C at a heating rate of 10°C/min. and thereafter cooled from 220°C to 40°C at a rate of 10°C/min. and again heated from 40°C to 220°C at a rate of 10°C/min. The DSC curve is that obtained in the second temperature rise. Fig. 3 shows a case in which the base resin consists only of one polypropylene resin and contains no polyethylene resins. The "tm" indicates melting point. The "tf" indicates melt end temperature, which is the temperature at which the high-temperature-side tail of the melting peak in the second temperature rise meets the base line at the high-temperature side.

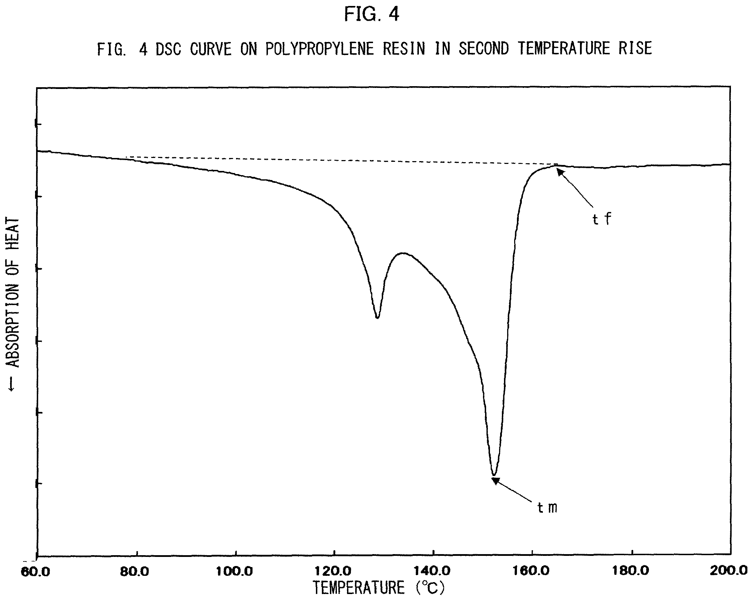

Fig. 4 shows one example of a DSC curve obtained when a base resin of expanded polypropylene resin particles in accordance with one embodiment of the present invention is heated from 40°C to 220°C at a heating rate of 10°C/min. and thereafter cooled from 220°C to 40°C at a rate of 10°C/min. and again heated from 40°C to 220°C at a rate of 10°C/min. The DSC curve is that obtained in the second temperature rise. Fig. 4 shows a case in which the base resin is a mixture of a polypropylene resin and a polyethylene resin. The "tm" indicates melting point. The "tf" indicates melt end temperature, which is the temperature at which the high-temperature-side tail of the melting peak in the second temperature rise meets the base line at the high-temperature side. The DSC curve may have the third peak resulting from PE at around 125°C to 130°C as compared with Fig. 3, depending on the amount of PE.

Description of Embodiments

The following description will discuss one embodiment of the present invention on the basis of specific examples. However, the present invention is not limited to the following embodiment. The present invention is not limited to any of configurations described below, but can be altered in many ways within the scope of the claims. An embodiment and/or an example derived from a combination of technical means disclosed in different embodiments and/or examples are/is also encompassed in the technical scope of the present invention.

Furthermore, any numerical range expressed as "A to B" in the present specification means "A or greater (A inclusive) and B or less (B inclusive)" unless otherwise stated.

1. Expanded polypropylene resin particles

Expanded polypropylene resin particles in accordance with one embodiment of the present invention are expanded polypropylene resin particles containing a polypropylene resin (X) as a base resin. The polypropylene resin (X) contains a polypropylene resin (I) in an amount of 85 to 99 weight% and a high density polyethylene resin (II) in an amount of 1 to 15 weight% so that the total amount of the polypropylene resin (I) and the high density polyethylene resin (II) is 100 weight%. The polypropylene resin (I) has a melt flow rate of 3 g/10min. or more and 20 g/10 min. or less and a melting point of 148°C or above and 160°C or below. The high density polyethylene resin (II) has a density of 0.93 to 0.97 g/cm$^3$ and a melt flow rate of 0.1 g/10min. or more and 15 g/10min. or less. No or one foam nucleating agent is contained in the polypropylene resin (X). A hydrophilic compound is contained in the polypropylene resin (X). The expanded polypropylene resin particle has an expansion ratio of 10 times or greater and 40 times or less, an average cell diameter of 100 $\mu$m or greater and 250 $\mu$m or less, and an open cell ratio of 0% or greater and 10% or less.

The polypropylene resin (I) in accordance with one embodiment of the present invention has a melting point as high as 148°C or above and 160°C or below, and thus is a high-strength polypropylene resin. Use of a high-strength polypropylene resin provides a high-strength polypropylene resin in-mold expanded molded product, but the expanded particles resulting from the high-strength polypropylene resin usually tend to have fine cell diameter. The reason for this seems to be that crystals in a resin serve as expansion nuclei and that the use of the high-melting polypropylene resin having a high degree of crystallinity increases the number of the expansion nuclei. Thus, when trying to obtain expanded polypropylene resin particles from a high-strength polypropylene resin, the cell diameter of the expanded particles becomes fine, resulting in a tendency to deteriorate the surface properties of an in-mold expanded molded product obtained through in-mold foaming molding of the resulting expanded particles. In this regard, the expanded polypropylene resin particles in accordance with one embodiment of the present invention include the above features, and therefore the cell diameter of the expanded polypropylene resin particles does not become fine and achieves uniformity. The result is that an in-mold expanded molded product obtained through in-mold foaming molding of the resulting expanded particles has high strength and good surface properties.

It is noted that, in this specification, "expanded polypropylene resin particles" may be referred to as "expanded particles" for short.

It is noted that, in this specification, a "polypropylene resin in-mold expanded molded product" obtained by molding expanded polypropylene resin particles may be referred to as an "in-mold expanded molded product" for short.

It is noted that, in this specification, a "method for producing a polypropylene resin in-mold expanded molded product" from expanded polypropylene resin particles may be referred to as "a production method of an in-mold expanded molded product" for short.

1-1. Polypropylene resin (I)

The polypropylene resin (I) for use in one embodiment of the present invention is preferably a polypropylene random copolymer that contains propylene and a comonomer(s) other than propylene, from the viewpoint of production stability of expanded particles and the strength of an in-mold expanded molded product obtained through in-mold foaming molding of the resulting expanded particles.

Examples of the comonomer include C2 or C4 to C12 $\alpha$-olefins such as 1-butene, ethylene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene. One of these comonomers may be used individually or two or more of these comonomers may be used in combination.

Of these comonomers, 1-butene and/or ethylene is/are preferred because they achieve good foamability in obtaining expanded polypropylene resin particles and provide good surface appearance of a polypropylene resin in-mold expanded molded product obtained through in-mold foaming molding of the resulting expanded particles. The comonomer is more preferably 1-butene, because this makes it possible to obtain a polypropylene resin composition having a flexural modulus of 1200 MPa or greater and 1700 MPa or less (this will be described later).

The total amount of comonomers contained in the polypropylene resin (I) for use in one embodiment of the present invention is not particularly limited, and is preferably 0.5 weight% or more and 10 weight% or less, more preferably 1.5 weight% or more and 8 weight% or less, even more preferably 2.5 weight% or more and 6 weight% or less, with respect to 100 weight% of the polypropylene resin (I).

A polypropylene resin in which the total amount of comonomers is less than 0.5 weight% strongly tends to have a high melting point and, when the resulting expanded particles are to be molded through in-mold foaming, a molding pressure (steam heating pressure) exceeds 0.40 MPa (gage pressure) and the particles may be difficult to mold.

If the total amount of the comonomers is more than 10 weight%, the steam heating pressure for in-mold foaming molding of the resulting expanded particles decreases. However, the melting point of the polypropylene resin itself lowers and the expandability in the in-mold foaming molding increases, and thus the molding cycle tends to become long and the resulting in-mold expanded molded product tends not to satisfy practical rigidity such as compressive strength. In the case where the practical rigidity of the in-mold expanded molded product is not satisfactory, the expansion ratio of the molded product in in-mold foaming molding has to be reduced and, in such a case, a lightweight molded product cannot be easily obtained.

The polypropylene resin (I) for use in one embodiment of the present invention has a melt flow rate (hereinafter referred to as "MFR") of preferably 3 g/10min. or more and 20 g/10min. or less, more preferably 5 g/10min. or more and 15 g/10min. or less, most preferably 6 g/10min. or more and 12 g/10min. or less.

In a case where the MFR of the polypropylene resin (I) is less than 3 g/10min., an in-mold expanded molded product obtained through in-mold foaming molding of the resulting expanded particles tends to have a deteriorated surface appearance. In a case where the MFR is more than 20 g/10min., the expandability in in-mold foaming molding increases too much and thus the molding cycle tends to become long.

Note that the MFR of the polypropylene resin (I) in accordance with one embodiment of the present invention is measured with the use of an MFR measuring instrument described in JIS-K7210 and under conditions involving an orifice having a diameter of $2.0959 \pm 0.005$ mm and a length of $8.000 \pm 0.025$ mm, a load of 2160 g, and a temperature of $230°C \pm 0.2°C$.

The polypropylene resin (I) for use in one embodiment of the present invention has a melting point of 148°C or above and 160°C or below, even more preferably 148°C or above and 158°C or below, particularly preferably 148°C or above and 155°C or below.

It should be noted, here, that the melting point of the polypropylene resin (I) is measured in the following manner: 1 mg or more and 10 mg or less of the polypropylene resin (I) is heated from 40°C to 220°C at a rate of 10°C/min. and thereafter cooled from 220°C to 40°C at a rate of 10°C/min. and again heated from 40°C to 220°C at a rate of 10°C/min. with the use of a differential scanning calorimeter DSC to obtain a DSC curve; and the melting peak temperature on the DSC curve in the second temperature rise is used as the melting point of the polypropylene resin (I).

In a case where the melting point of the polypropylene resin (I) is below 145°C, an in-mold expanded molded product obtained through in-mold foaming molding of the resulting expanded particles tends to have insufficient compressive strength. In a case where the melting point is above 165°C, the mold heating pressure in in-mold foaming molding tends to become too high and the expanded particles tend to be unmoldable with a usual in-mold foaming molding apparatus resistant to pressure of up to 0.4 MPa (gage pressure).

Such a polypropylene resin (I) may be one polypropylene resin alone or a mixture of two or more different polypropylene resins. The method of obtaining the mixture is not limited to a particular kind, and may be, for example, a method by which the polypropylene resins are mixed with the use of a blender or the like or a method by which the polypropylene resins are blended through polymerization performed in multiple steps.

A polymerization catalyst for polymerization of a polypropylene resin is not limited to a particular kind, and may be any of various catalysts such as a Ziegler-Natta catalyst, a metallocene catalyst, and/or the like.

1-2. High density polyethylene resin (II)

The polypropylene resin (X), which is a base resin of the expanded polypropylene resin particles in accordance with one embodiment of the present invention, is obtained by mixing a high density polyethylene resin (II) with the polypropylene resin (I). The polypropylene resin (X) serving as the base resin, which contains the high density polyethylene resin (II) in addition to the polypropylene resin (I), brings about an effect such that the cell diameter of the resulting expanded particles does not become too fine and that, despite a relatively small cell diameter, an in-mold expanded molded product having a good surface appearance can be obtained without impairing compressive strength characteristics.

The high density polyethylene resin (II) for use in one embodiment of the present invention has a density of preferably 0.93 g/cm³ or greater, more preferably 0.95 g/cm³ or greater and 0.97 g/cm³ or less.

If the density of the high density polyethylene resin (II) is less than 0.93 g/cm$^3$, the resulting expanded particles tend to have nonuniform cell diameter. If the density is greater than 0.97 g/cm$^3$, the foamability tends to decrease in obtaining expanded particles.

The MFR of the high density polyethylene resin (II) for use in one embodiment of the present invention is preferably 0.1 g/10min. or more and 20 g/10min. or less, more preferably 0.1 g/10min. or more and 15 g/10min. or less, in view of the surface appearance of an in-mold expanded molded product obtained through in-mold foaming molding of the resulting expanded particles and in view of the molding cycle in the in-mold foaming molding.

Note that the MFR of the high density polyethylene resin (II) is measured in accordance with JIS K7210 with a load of 2160 g and a temperature of 190°C±0.2°C.

The melting point of the high density polyethylene resin (II) for use in one embodiment of the present invention is not particularly limited, and is preferably 125°C or above and 135°C or below, more preferably 125°C or above and 130°C or below, even more preferably 128°C or above and 130°C or below.

It should be noted, here, that the melding point of the high density polyethylene resin (II) is measured in the following manner: 1 mg or more and 10 mg or less of the high density polyethylene resin (II) is heated from 40°C to 220°C at a rate of 10°C/min. and thereafter cooled from 220°C to 40°C at a rate of 10°C/min. and again heated from 40°C to 220°C at a rate of 10°C/min. with the use of a differential scanning calorimeter DSC to obtain a DSC curve; and the melting peak temperature on the DSC curve in the second temperature rise is used as the melting point of the high density polyethylene resin (II).

If the melting point of the high density polyethylene resin (II) is below 125°C, an in-mold expanded molded product obtained through in-mold foaming molding of the resulting expanded particles tends to have decreased practical rigidity such as decreased compressive strength. If the melting point is above 135°C, there is a tendency that the mixing of the polypropylene resin (I) and the high density polyethylene resin (II) is not so effective for the in-mold expanded molded product.

The high density polyethylene resin (II) in accordance with one embodiment of the present invention preferably has a flexural modulus of 800 MPa or greater and 1600 MPa or less.

Note here that the flexural modulus of the high density polyethylene resin (II) was measured by: drying the high density polyethylene resin (II) at 80°C for 6 hours; then preparing a bar having a thickness of 6.4 mm (a width of 12.7 mm and a length of 127 mm) by use of a 35t injection molding machine at a cylinder temperature of 200°C and a mold temperature of 30°C; and performing a flexural test with respect to the bar in accordance with ASTM D790 within a week of the preparation of the bar.

The high density polyethylene resin (II) for use in one embodiment of the present invention may contain a comonomer, other than ethylene, which is copolymerizable with ethylene. Examples of the comonomer copolymerizable with ethylene include C3 to C18 α-olefins such as propylene, 1-butene, 1-pentene, 1-hexene, 3,3-dimethyl-1-butene, 4-methyl-1-pentene, 4,4-dimethyl-1-pentene, and 1-octene. Each of these comonomers may be used individually or two or more of these comonomers may be used in combination.

1-3. Polypropylene resin (X)

It is preferable that the polypropylene resin (X) in accordance with one embodiment of the present invention contain the polypropylene resin (I) in an amount of 85 to 99 weight% and the high density polyethylene resin (II) in an amount of 1 to 15 weight% so that the total amount of the polypropylene resin (I) and the high density polyethylene resin (II) is 100 weight%. It is more preferable that the polypropylene resin (X) contain the polypropylene resin (I) in an amount of 86 to 98 weight% and the high density polyethylene resin (II) in an amount of 2 to 14 weight%.

If the percentage of the high density polyethylene resin (II) contained in the polypropylene resin (X) is less than 1 weight% (the total amount of the polypropylene resin (I) and the high density polyethylene resin (II) is 100 weight%), there is a tendency that the molding cycle in in-mold foaming molding of the resulting expanded particles is difficult to shorten. If the percentage of the high density polyethylene resin (II) contained in the polypropylene resin (X) is more than 15 weight%, there is a tendency that the resulting expanded polypropylene resin particles have a high open cell ratio and that an in-mold expanded molded product obtained through in-mold foaming molding of the resulting expanded particles has decreased strength.

The polypropylene resin (X) for use in one embodiment of the present invention has a flexural modulus of preferably 1200 MPa or greater and 1700 MPa or less, more preferably 1200 MPa or greater and 1550 MPa or less, for an in-mold expanded molded product obtained through in-mold foaming molding of the resulting expanded particles to have both high strength and good surface appearance.

Generally, a polypropylene resin in-mold expanded molded product, which is obtained through in-mold foaming molding of the expanded polypropylene resin particles made from a polypropylene resin having high flexural modulus, tends to have decreased fusibility because the expanded polypropylene resin particles have fine cell diameter and thus the expanded particles have lower expandability in the in-mold foaming molding. This leads to a tendency that the molding pressure for obtaining a good in-mold expanded molded product becomes high in the in-mold foaming molding.

In this regard, according to one embodiment of the present invention, the cell diameter of the resulting expanded polypropylene resin particles is prevented from becoming fine or becoming too fine, and therefore the expandability of the expanded particles does not tend to decrease even with a relatively low molding pressure. This gives an in-mold expanded molded product having a good-looking surface. In addition, the in-mold expanded molded product tends to have high compressive strength. Therefore, the in-mold expanded molded product is suitable for use in applications that require high rigidity such as bumpers and in applications that require durability such as returnable containers. One embodiment of the present invention also brings about an effect such that a more lightweight in-mold expanded molded product can be obtained.

For the polypropylene resin (X) to have a flexural modulus of 1200 MPa or greater and 1700 MPa or less, the polypropylene resin in the polypropylene resin (X) is preferably composed mainly of the earlier-described polypropylene resin (I). It is especially preferable that a polypropylene resin containing a small amount of comonomer be used and that 1-butene be contained as a comonomer.

Note that the flexural modulus of the polypropylene resin (X) was measured by: drying the polypropylene resin (X) at 80°C for 6 hours; then preparing a bar having a thickness of 6.4 mm (a width of 12.7 mm and a length of 127 mm) by use of a 35t injection molding machine at a cylinder temperature of 200°C and a mold temperature of 30°C; and performing a flexural test with respect to the bar in accordance with ASTM D790 within a week of the preparation of the bar.

In this specification, the melding point tm of the polypropylene resin (X) as a base resin is, as shown in Fig. 3, measured in the following manner: 1 mg or more and 10 mg or less of the polypropylene resin is heated from 40°C to 220°C at a rate of 10°C/min. and thereafter cooled from 220°C to 40°C at a rate of 10°C/min. and again heated from 40°C to 220°C at a rate of 10°C/min. with the use of a differential scanning calorimeter DSC to obtain a DSC curve; and the melting peak temperature (tm in Fig. 3) on the DSC curve in the second temperature rise is used as the melting point of the polypropylene resin (X). Furthermore, the melt end temperature tf denotes the temperature at which the high-temperature-side tail of the melting peak in the second temperature rise meets the base line at the high-temperature side.

It is noted that, although Fig. 3 shows an example of one melting peak, two melting peaks are likely to appear as shown in Fig. 4 when the amount of the high density polyethylene resin (II) is increased.

For example, in a case where a high density polyethylene resin (II) having a melting point of 130°C is added, a melting peak resulting from the high density polyethylene resin (II) may appear at or near 130°C in addition to one melting peak resulting from the polypropylene resin (I) as shown in Fig. 3. This results in two melting peaks in total.

In such a case where two melting peaks appear on the DSC curve in the second temperature rise, the temperature at the melting peak with greater heat absorption quantity may be used as "tm".

The melting point of the polypropylene resin (X) for use in one embodiment of the present invention is preferably 145°C or above and 165°C or below, more preferably 148°C or above and 160°C or below, even more preferably 148°C or above and 158°C or below, particularly preferably 148°C or above and 155°C or below.

In a case where the melting point of the polypropylene resin (X) is below 145°C, an in-mold expanded molded product obtained through in-mold foaming molding of the resulting expanded particles tends to have insufficient compressive strength. In a case where the melting point is above 165°C, the mold heating pressure in in-mold foaming molding tends to become too high and the expanded particles tend to be unmoldable with a usual in-mold foaming molding apparatus resistant to pressure of up to 0.4 MPa (gage pressure).

1-4. Foam nucleating agent

The polypropylene resin (X) in the expanded polypropylene resin particles in accordance with one embodiment of the present invention preferably contains no or one foam nucleating agent.

Specific examples of the foam nucleating agent for use in one embodiment of the present invention include silica (silicon dioxide), silicate, alumina, diatomaceous earth, calcium carbonate, magnesium carbonate, calcium phosphate, feldspar, apatite, and barium sulfate. Examples of silicate include talc, magnesium silicate, kaolin, halloysite, dickite, aluminum silicate, and zeolite. It is preferable that none or one of such foam nucleating agents be contained.

The polypropylene resin (X) of one embodiment of the present invention, which contains no or one foam nucleating agent, brings about an effect such that the molding cycle in a production method of an in-mold expanded molded product becomes short and that the in-mold expanded molded product has better dimensional accuracy. In comparison with the case in which two or more foam nucleating agents are contained, the case where no or one foam nucleating agent is contained does not cause, in a production method of an in-mold expanded molded product, non-uniformity of cell nucleation that would occur due to different kinds of foam nucleating agent and therefore the cell diameter obtained is uniform and the molding cycle and the dimensions of a molded product are less affected.

In view of uniformity of cell diameters of the resulting expanded particles, the amount of the foam nucleating agent in one embodiment of the present invention is preferably 0.005 parts by weight or more and 2 parts by weight or less, more preferably 0.01 parts by weight or more and 1 part by weight or less, even more preferably 0.03 parts by weight or more and 0.5 parts by weight or less, with respect to 100 parts by weight of the polypropylene resin (X).

1-5. Additives

In one embodiment of the present invention, some additive(s) may be added to the polypropylene resin (X), provided that the effects of one embodiment of the present invention are not impaired. Examples of the additives include colorants, hydrophilic compounds, antistatic agents, flame retarders, and antioxidants.

A colorant for use in one embodiment of the present invention is not limited to a particular kind, provided that the effects of one embodiment of the present invention are not impaired. Examples of the colorant for use in one embodiment of the present invention include carbon black, ultramarine blue, cyanine pigment, azo pigment, quinacridone pigment cadmium yellow, chrome oxide, iron oxide, perylene pigment, and anthraquinone pigment. One of these colorants may be used individually or two or more of them may be used in combination.

Of those listed above, the addition of carbon black generally tends to cause the expanded polypropylene resin particles to have finer cell diameter. However, in regard to the expanded polypropylene resin particles obtained in one embodiment of the present invention, the cell diameter is prevented from becoming fine or becoming too fine. Therefore, the addition of carbon black in one embodiment of the present invention is preferred.

The amount of carbon black in one embodiment of the present invention is preferably 0.1 parts by weight or more and 10 parts by weight or less, more preferably 0.5 parts by weight or more and 8 parts by weight or less, even more preferably 1 part by weight or more and 6 parts by weight or less, with respect to 100 parts by weight of the polypropylene resin (X).

Carbon black contained in an amount less than 0.1 parts by weight tends to result in weak color of the resulting expanded particles. Carbon black contained in an amount more than 10 parts by weight tends to hinder the effect of increasing cell diameter of the resulting expanded particles.

In one embodiment of the present invention, the addition of a hydrophilic compound is preferred in that it facilitates an improvement in expansion ratio of the expanded polypropylene resin particles and that an effect of one embodiment of the present invention, i.e., the effect of increasing the cell diameter of the resulting expanded particles, is more readily achieved.

Examples of a hydrophilic compound for use in one embodiment of the present invention include water-absorbing organic compounds such as glycerin, diglycerin, polyethylene glycol (PEG), glycerin fatty acid ester, melamine, isocyanuric acid, and melamine-isocyanuric acid condensate.

The amount of a hydrophilic compound contained in one embodiment of the present invention is preferably 0.01 parts by weight or more and 5 parts by weight or less, more preferably 0.1 parts by weight or more and 2 parts by weight or less, with respect to 100 parts by weight of the polypropylene resin (X).

If a hydrophilic compound is contained in an amount less than 0.01 parts by weight, there is a tendency that the effect of improving expansion ratio and the effect of increasing cell diameter are difficult to achieve in the resulting expanded particles. If a hydrophilic compound is contained in an amount more than 5 parts by weight, there is a tendency that the hydrophilic compound is difficult to diffuse uniformly in the polypropylene resin during the production of expanded particles.

It is noted that some flame retarders and antioxidants have the ability to make finer the cell diameter of expanded polypropylene resin particles. If any of such flame retarders and antioxidants is to be used, the amount thereof is preferably selected in a manner such that the effects of an embodiment of the present invention are not significantly impaired.

In one embodiment of the present invention, an additive(s) such as a colorant, a hydrophilic compound, an antistatic agent, a flame retarder, and/or an antioxidant may be added directly to the polypropylene resin (X). Alternatively, the following arrangement may be employed: a masterbatch resin is prepared in advance by adding, at high concentration, the additive(s) to some other resin; and the masterbatch resin is added to the polypropylene resin (X).

A resin for use in preparing a masterbatch resin is preferably a polypropylene resin. It is most preferable that the masterbatch resin be prepared using the polypropylene resin (I) which constitutes the polypropylene resin (X) serving as a base resin of the expanded polypropylene resin particles.

2. Method for producing expanded polypropylene resin particles

A method for producing expanded polypropylene resin particles in accordance with one embodiment of the present invention is a method for producing expanded polypropylene resin particles containing a polypropylene resin (X) as a base resin. The polypropylene resin (X) contains a polypropylene resin (I) in an amount of 85 to 99 weight% and a high density polyethylene resin (II) in an amount of 1 to 15 weight% so that the total amount of the polypropylene resin (I) and the high density polyethylene resin (II) is 100 weight%. The polypropylene resin (I) has a melt flow rate of 3 g/10min. or more and 20 g/10min. or less and a melting point of 148°C or above and 160°C or below. The high density polyethylene resin (II) has a density of 0.93 to 0.97 g/cm$^3$ and a melt flow rate of 0.1 g/10min. or more and 15 g/10min.

or less. No or one foam nucleating agent is contained in the polypropylene resin (X). A hydrophilic compound is contained in the polypropylene resin (X). The expanded polypropylene resin particles have an expansion ratio of 10 times or greater and 40 times or less, an average cell diameter of 100 $\mu$m or greater and 250 $\mu$m or less, and an open cell ratio of 0% or greater and 10% or less. The method includes: obtaining a dispersion slurry by placing water, an inorganic gas-based foaming agent, and polypropylene resin particles composed of the polypropylene resin (X) in a pressure-resistant container and dispersing the polypropylene resin particles with stirring, and increasing temperature and pressure; and thereafter releasing the dispersion slurry from the pressure-resistant container to a region having a pressure lower than the internal pressure of the pressure-resistant container to expand the polypropylene resin particles.

2-1. Method of producing polypropylene resin particles

In production of expanded polypropylene resin particles in accordance with one embodiment of the present invention, a method of producing polypropylene resin particles is performed first, for example.

Examples of the method of producing polypropylene resin particles include a method in which an extruder is used. Specifically, for example, the polypropylene resin (I) and the high density polyethylene resin (II) may blended with some other additive(s) such as a colorant, a hydrophilic compound, and/or the like depending on need and the blend may be fed into an extruder and melted and kneaded, extruded through a die, and then cooled, and thereafter chopped with the use of a cutter into particles in a desired shape such as a columnar shape, an ellipsoidal shape, a spherical shape, a cubic shape, and/or a rectangular parallelepiped shape. Alternatively, the polypropylene resin (I) and the high density polyethylene resin (II) may be fed into an extruder and some other additive(s) such as a colorant, a hydrophilic compound, and/or the like may be fed downstream of the resin inlet of the extruder depending on need to cause mixing inside the extruder, such that the polypropylene resin (I), the high density polyethylene resin (II), and the additive(s) are melted and kneaded.

The weight of each of the polypropylene resin particles thus obtained from the polypropylene resin (X) is preferably 0.2 mg per particle or greater and 10 mg per particle or less, more preferably 0.5 mg per particle or greater and 5 mg per particle or less.

If the weight of each of the polypropylene resin particles is less than 0.2 mg per particle, then handleability tends to decrease in the production of expanded particles. If the weight is greater than 10 mg per particle, then a mold-filling property for fine structures tends to decrease in a process of molding the resulting expanded particles through in-mold foaming.

2-2. Method for producing expanded polypropylene resin particles

Expanded polypropylene resin particles in accordance with one embodiment of the present invention can be produced from the thus-obtained polypropylene resin particles.

Preferred examples of a method of producing the expanded polypropylene resin particles in accordance with one embodiment of the present invention include a method of producing expanded polypropylene resin particles in an aqueous dispersion system by performing the following expansion process: polypropylene resin particles and a foaming agent such as carbon dioxide are dispersed in an aqueous dispersion medium in a pressure-resistant container; the pressure-resistant container is heated to a temperature equal to or above the softening temperature of the polypropylene resin particles and is subjected to pressure; and thereafter the temperature and the pressure are maintained for a certain period of time; and thereafter the dispersion slurry is released from the pressure-resistant container to a region having a pressure lower than the internal pressure of the pressure-resistant container.

The following is a specific example.

(1) Polypropylene resin particles, an aqueous dispersion medium, and, as necessary, a dispersing agent, for example, are placed into a pressure-resistant container. Then, while the resultant mixture is stirred, the inside of the pressure-resistant container is vacuumed as necessary. Then, a foaming agent having a pressure of 1 MPa (gage pressure) or more and 2 MPa (gage pressure) or less is introduced into the pressure-resistant container, and then the pressure-resistant container is heated to a temperature equal to or above the softening temperature of the polypropylene resin. By heating, the internal pressure of the pressure-resistant container rises to approximately 2 MPa (gage pressure) or more and 5 MPa (gage pressure) or less. If needed, an additional foaming agent is introduced at around a foaming temperature to achieve a desired foaming pressure, the temperature is further adjusted, and thereafter the temperature and pressure are maintained for a certain period of time, and then the dispersion slurry is released from the pressure-resistant container into a region having a pressure lower than the internal pressure of the pressure-resistant container, whereby expanded polypropylene resin particles are obtained. Note that, in this specification, the "region having a pressure lower than the internal pressure of a pressure-resistant container" may be referred to as "low-pressure region".

The following is another preferred arrangement that may be employed.

(2) Polypropylene resin particles, an aqueous dispersion medium, and, as necessary, a dispersing agent, for example, are placed into a pressure-resistant container. Then, while the resultant mixture is stirred, the inside of the pressure-resistant container is vacuumed as necessary. Then, while the pressure-resistant container is heated to a temperature equal to or above the softening temperature of the polypropylene resin, a foaming agent is introduced into the pressure-resistant container. The expanded polypropylene resin particles may alternatively be obtained by further adjusting the temperature and thereafter maintaining the temperature for a certain period of time, and then releasing the dispersion slurry from the pressure-resistant container into a region having a pressure lower than the internal pressure of the pressure-resistant container.

The following is a further preferred arrangement that may be employed.

(3) Polypropylene resin particles, an aqueous dispersion medium, and, as necessary, a dispersing agent, for example, are placed into a pressure-resistant container. Then, the pressure-resistant container is heated to a temperature around a foaming temperature. A foaming agent is further introduced into the pressure-resistant container, temperature is adjusted to the foaming temperature, and the temperature is maintained for a certain period of time. Then, the dispersion slurry is released from the pressure-resistant container into a region having a pressure lower than the internal pressure of the pressure-resistant container, so that polypropylene polyolefin resin particles are obtained.

Note that the expansion ratio of expanded particles can be adjusted by: adjusting a pressure-releasing speed during foaming by increasing the internal pressure of the pressure-resistant container through injecting carbon dioxide, nitrogen, air, or a substance used as a foaming agent, into the pressure-resistant container before the dispersion slurry is released into the low-pressure region; and controlling the pressure through introducing carbon dioxide, nitrogen, air, or a substance used as a foaming agent, into the pressure-resistant container also while the dispersion slurry is being released into the low-pressure region.

The expansion ratio of the expanded polypropylene resin particles of an embodiment of the present invention is 10 times or more to 40 times or less. If the expansion ratio of the expanded polypropylene resin particles is less than 5 times, then weight reduction of an in-mold expanded molded product obtained through in-mold foaming molding of the resulting expanded particles tends to be insufficient. If the expansion ratio of the expanded polypropylene resin particles is more than 60 times, then mechanical strength of the in-mold expanded molded product tends to be impractical.

The average cell diameter of the expanded polypropylene resin particles in accordance with one embodiment of the present invention is 100 $\mu$m or greater and 250 $\mu$m or less, more preferably 110 $\mu$m or greater and 240 $\mu$m or less, even more preferably 120 $\mu$m or greater and 230 $\mu$m or less.

If the average cell diameter of the expanded polypropylene resin particles is less than 100 pm, there is a tendency that a polypropylene resin in-mold expanded molded product obtained through in-mold foaming molding of the resulting expanded particles has deteriorated surface appearance. If the average cell diameter is greater than 250 pm, there is a tendency that the uniformity of the cell diameters of the expanded particles decreases and also there is a tendency that the fusibility of the in-mold expanded molded product partially deteriorates and that the surface appearance of the polypropylene resin in-mold expanded molded product also deteriorates.

The expanded polypropylene resin particles in accordance with one embodiment of the present invention has an open cell ratio of 0% or greater and 10% or less, more preferably 0% or greater and 9% or less.

If the open cell ratio of the expanded polypropylene resin particles is greater than 10%, there is a tendency that the resulting expanded particles readily shrink when molded through in-mold foaming and thus the resulting in-mold expanded molded product has poor surface appearance and reduced compressive strength.

In regard to the DSC curve obtained by differential scanning calorimetry (DSC) in which the temperature of the expanded polypropylene resin particles in accordance with one embodiment of the present invention is raised at a heating rate of 10 °C/min., there may be the following cases depending on the amount of the high density polyethylene (II): a case in which two melting peaks appear and accordingly there are at least two melting heat quantities (low-temperature-side melting heat quantity (Ql) and high-temperature-side melting heat quantity (Qh)) as shown in Fig. 1; and a case in which three melting peaks appear in total including two melting peaks resulting from the polypropylene resin (I) and also a melting peak resulting from the high density polyethylene resin (II) which appears at or near 130°C as shown in Fig. 2.

The expanded polypropylene resin particles in accordance with one embodiment of the present invention can be obtained easily by the earlier-described method for producing expanded polypropylene resin particles in an aqueous dispersion system, in which the foaming temperature (temperature inside the pressure-resistant container during foaming) is adjusted as needed to an appropriate value and the temperature is maintained for a certain period of time.

Specifically, assuming that the melting point of the polypropylene resin (X) as a base resin is represented as "tm" and the melt end temperature of the polypropylene resin (X) is represented as "tf", normally the foaming temperature is preferably 80°C or above and below tf(°C).

At a temperature below 80°C, there is a tendency that the polypropylene resin (X) does not soften much and therefore does not foam when producing expanded particles. At a temperature above tf(°C), there is a tendency that the polypropylene resin (X) ends up melting and aggregating in the pressure-resistant container in the production of expanded particles.

A preferred range of the foaming temperature differs depending on what foaming agent is selected, because the plasticizing effect, which is to facilitate the softening of the polypropylene resin, differs depending on the foaming agent. In a case of carbon dioxide for example, the foaming temperature is preferably tm-10(°C) or above and below tf(°C), more preferably tm-8(°C) or above and below tf(°C), even more preferably tm-5(°C) or above and tf-2(°C) or below.

In the method for producing expanded polypropylene resin particles, the temperature inside the pressure-resistant container at the time of foaming is maintained preferably for 1 minute or longer and 120 minutes or shorter, more preferably for 5 minutes or longer and 60 minutes or shorter, in view of controlling the crystallinity condition of the polypropylene resin and in view of production cycle.

In one embodiment of the present invention, the entire melting heat quantity (Q), the low-temperature-side melting heat quantity (Q1), and the high-temperature-side melting heat quantity (Qh) of expanded polypropylene resin particles are defined as follows (with reference to Figs. 1 and 2).

On the DSC curve obtained, the entire melting heat quantity (Q=Ql+Qh), which is the sum of the low-temperature-side melting heat quantity (Ql) and the high-temperature-side melting heat quantity (Qh), is represented by the area enclosed by line segment A-B and the DSC curve. Line segment A-B connects point A (heat absorption quantity at 80°C) and point B (heat absorption quantity at the temperature at which high-temperature-side melting ends).

The low-temperature-side melting heat quantity (Ql) is represented by the area enclosed by line segment A-D, line segment C-D, and the DSC curve, and the high-temperature-side melting heat quantity (Qh) is represented by the area enclosed by line segment B-D, line segment C-D, and the DSC curve. Point C is the point at which the heat absorption quantity is smallest between the following two melting heat quantity regions: the low-temperature-side melting heat quantity (Ql) and the high-temperature-side melting heat quantity (Qh), on the DSC curve. Point D is the intersection of line segment A-B and a line that extends from point C in a direction perpendicular to line segment A-B.

It is noted that, in a case where three melting peaks appear as illustrated in Fig. 2, there are two points that can serve as the smallest heat absorption quantity between two adjacent melting heat quantity regions. In such a case, the point at the high-temperature side is used as point C.

In regard to the expanded polypropylene resin particles in accordance with one embodiment of the present invention, the percentage of the high-temperature-side melting heat quantity (Qh) [={Qh/(Ql+Qh)}×100(%)] (hereinafter also referred to as "high-temperature heat quantity ratio") is preferably 10% or greater and 50% or less, more preferably 15% or greater and 40% or less, even more preferably 15% or more and 30% or less.

If the high-temperature heat quantity ratio is less than 10%, the compressive strength of an in-mold expanded molded product obtained through in-mold foaming molding of the resulting expanded particles is low and the practical rigidity tends to decrease. If the high-temperature heat quantity ratio is greater than 50%, there is a tendency that the compressive strength of the in-mold expanded molded product becomes high but the expandability of the expanded polypropylene resin particles is too low and that the in-mold expanded molded product as a whole is poorly fused or a high molding pressure is required for fusion. The average cell diameter of the expanded polypropylene resin particles also tends to become small.

The high-temperature heat quantity ratio can be adjusted as appropriate by, for example, adjusting the time for which the earlier-described temperature inside the pressure-resistant container is maintained (i.e. time from when the temperature inside the pressure-resistant container reaches a desired temperature to when foaming starts), the foaming temperature (which is a temperature during foaming and which may or may not be equal to the above temperature inside the pressure-resistant container), foaming pressure (pressure during foaming), and/or the like, in the production of expanded particles. In general, the high-temperature heat quantity ratio or the heat quantity at the high-temperature-side melting peak tends to become large when the time for which the temperature is maintained is increased, foaming temperature is lowered, or/and foaming pressure is lowered.

Because of these factors, conditions to obtain a desired percentage of high-temperature-side melting heat quantity can be easily found by conducting several experiments in which the time for which the temperature is maintained, the foaming temperature, or/and the foaming pressure is/are systematically changed. Note that the foaming pressure can be adjusted by adjusting the amount of a foaming agent.

In one embodiment of the present invention, the pressure-resistant container into which the polypropylene resin particles are dispersed is not limited to any particular one, provided that the pressure-resistant container is resistant to the pressure inside the container and the temperature inside the container during production of the expanded particles. Examples of the pressure-resistant container include autoclave-type pressure-resistant containers.

An aqueous dispersion medium for use in one embodiment of the present invention is preferably water alone, in view of the environmental load that the waste water would impose. Alternatively, the aqueous dispersion medium may be a dispersion medium obtained by adding methanol, ethanol, ethylene glycol, glycerin, or the like to water. In a case a hydrophilic compound is contained in one embodiment of the present invention, the water in the aqueous dispersion medium serves also as a foaming agent. The water serving also as a foaming agent contributes to an improvement in expansion ratio of the resulting expanded particles.

In one embodiment of the present invention, normally the aqueous dispersion medium is used preferably in an amount of preferably 100 parts by weight or more and 500 parts by weight or less with respect to 100 parts by weight of the polypropylene resin particles, for the polypropylene resin particles to be well dispersed in the aqueous dispersion medium.

Examples of the foaming agent for use in one embodiment of the present invention include inorganic foaming agents such as air, nitrogen, carbon dioxide, and water.

The inorganic foaming agents are more advantageous than organic foaming agents in that the inorganic foaming agents have a low global warming potential and impose smaller environmental load and that they do not require explosion-proof facilities and thus the facility becomes less costly. Of the inorganic foaming agents, carbon dioxide is particularly preferred, because carbon dioxide has moderately high plasticizing effect and readily improves foamability when obtaining expanded polypropylene resin particles.

In a case where an inorganic foaming agent containing carbon dioxide and/or water, especially an inorganic foaming agent containing carbon dioxide, is used in the earlier-described method for producing expanded polypropylene resin particles with the use of an aqueous dispersion system, the average cell diameter is generally likely to become smaller than the cases in which a saturated hydrocarbon is used. However, according to one embodiment of the present invention, even in the case where the foaming agent is an inorganic foaming agent that contains carbon dioxide and/or water and thus the average cell diameter becomes relatively smaller than conventional cases in which a saturated hydrocarbon is used, the in-mold expanded molded product is likely to have improved surface appearance and the effects of one embodiment of the present invention are readily achieved. Therefore, using an inorganic foaming agent is preferred.

In one embodiment of the present invention, it is preferable to use a dispersing agent or/and a dispersion auxiliary agent in an aqueous dispersion medium in order to prevent polypropylene resin particles from agglomerating.

Examples of the dispersing agent for use in one embodiment of the present invention include inorganic dispersion agents such as tertiary calcium phosphate, tertiary magnesium phosphate, basic magnesium carbonate, calcium carbonate, barium sulfate, kaolin, talc, and clay. These inorganic dispersion agents may be used individually, or two or more of these inorganic dispersion agents may be used in combination.

Examples of the dispersion auxiliary agent for use in one embodiment of the present invention include: anionic surfactants of carboxylate type; anionic surfactants of sulfonate type such as alkyl sulfonate, n-paraffin sulfonate salt, alkyl benzene sulfonate, alkyl naphthalene sulfonate, and sulfosuccinate; anionic surfactants of sulfate ester type such as sulfonated oil, alkyl sulfate salt, alkyl ether sulfate, and alkyl amide sulfate; and anionic surfactants of phosphate ester type such as alkyl phosphate, polyoxyethylene phosphate, and alkyl allyl ether sulfate. These dispersion auxiliary agents may be used individually or two or more of these dispersion auxiliary agents may be used in combination.

Of these, the following are preferably used in combination: at least one dispersing agent selected from the group consisting of tertiary calcium phosphate, tertiary magnesium phosphate, barium sulfate, and kaolin; and a dispersion auxiliary agent which is n-paraffin sodium sulfonate.

The amounts of the dispersing agent and the dispersion auxiliary agent vary depending on their type and the type and amount of polypropylene resin particles used. Normally, with respect to 100 parts by weight of polypropylene resin particles, the dispersing agent is preferably used in an amount of 0.2 parts by weight or more and 3 parts by weight or less, and the dispersion auxiliary agent is preferably used in an amount of 0.001 parts by weight or more and 0.1 parts by weight or less.

The process of thus obtaining expanded polypropylene resin particles from polypropylene resin particles may be referred to as "first-step expansion process", and the expanded polypropylene resin particles thus obtained may be referred to as "first-step expanded particles".

The expansion ratio of the resulting first-step expanded particles may not reach 10 times, depending on the type of foaming agent in the production. In such a case, expanded polypropylene resin particles whose expansion ratio is improved in comparison with that of first-step expanded particles can be obtained by applying an internal pressure to the first-step expanded particles by impregnation of inorganic gas (e.g. air, nitrogen, carbon dioxide) and then bringing the first-step expanded particles into contact with steam having a certain pressure.

The process of thus further foaming the expanded polypropylene resin particles so as to obtain expanded polypropylene resin particles having a higher expansion ratio may be referred to as "second-step expansion process". Expanded polypropylene resin particles thus obtained through the second-step expansion process may be referred to as "second-step expanded particles".

In one embodiment of the present invention, the pressure of steam in the second-step expansion process is controlled at preferably 0.04 MPa (gage pressure) or greater and 0.25 MPa (gage pressure) or less, more preferably 0.05 MPa (gage pressure) greater and 0.15 MPa (gage pressure) or less, in consideration of the expansion ratio of the second-step expanded particles.

If the pressure of steam in the second-step expansion process is less than 0.04 MPa (gage pressure), then the expansion ratio of the resulting second-step expanded particles does not tend to improve. If the pressure is greater than 0.25 MPa (gage pressure), then the resulting second-step expanded particles tend to agglomerate and to become impossible to use the second-step expanded particles for subsequent in-mold foaming molding.

The internal pressure of the inorganic gas to be impregnated into the first-step expanded particles, that is, the internal pressure of expanded particles (absolute pressure), is desirably varied as appropriate in consideration of the expansion ratio of the second-step expanded particles and steam pressure in the second-step expansion process, and is preferably 0.2 MPa or greater (absolute pressure) and 0.6 MPa or less (absolute pressure).

If the internal pressure (absolute pressure) of the expanded particles is less than 0.2 MPa (absolute pressure), then steam having a high pressure is necessary to improve the expansion ratio, so that the second-step expanded particles tend to agglomerate. If the internal pressure (absolute pressure) of the expanded particles is greater than 0.6 MPa (absolute pressure), then the second-step expanded particles tend to become an open-cell foam. In such a case, rigidity, such as compressive strength, of an in-mold expanded molded product obtained through in-mold foaming molding of the resulting expanded particles tends to decrease.

The expanded polypropylene resin particles in accordance with one embodiment of the present invention may be either first-step expanded particles produced through a first-step expansion process or second-step expanded particles produced through a second-step expansion process.

The method for producing expanded polypropylene resin particles in accordance with one embodiment of the present invention may include a first-step expansion process or may include a second-step expansion process in addition to the first-step expansion process.

It is noted that the expanded polypropylene resin particles of one embodiment of the present invention exclude styrene-modified expanded polypropylene resin particles obtained through a process of impregnating polypropylene resin particles with styrene and polymerizing them. Although the reasons therefor are unknown, the effects of one embodiment of the present invention are not noticeable in the case of styrene-modified expanded polypropylene resin particles.

3. Polypropylene resin in-mold expanded molded product and method for producing polypropylene resin in-mold expanded molded product

A polypropylene resin in-mold expanded molded product in accordance with one embodiment of the present invention is preferably obtained by the following method for producing a polypropylene resin in-mold expanded molded product from the expanded polypropylene resin particles described earlier in the "1. Expanded polypropylene resin particles" section.

Alternatively, a polypropylene resin in-mold expanded molded product in accordance with one embodiment of the present invention is preferably obtained by the following method for producing a polypropylene resin in-mold expanded molded product from the expanded polypropylene resin particles produced by the method described earlier in the "2. Method for producing expanded polypropylene resin particles" section.

The expanded polypropylene resin particles in accordance with one embodiment of the present invention can be made into a polypropylene resin in-mold expanded molded product by a conventionally known in-mold foaming molding method.

Examples of an in-mold foaming molding method include:

A) a method by which expanded polypropylene resin particles are pressured with an inorganic gas such as air, nitrogen, or carbon dioxide so that the expanded polypropylene resin particles are impregnated with the inorganic gas and have a certain internal pressure, and thereafter the expanded polypropylene resin particles are filled into a mold and heated with steam to fuse together;

B) a method by which expanded polypropylene resin particles are compressed with gas pressure and are filled into a mold, and heated with steam to fuse together utilizing the recovery force of the expanded polypropylene resin particles; and

C) a method by which expanded polypropylene resin particles are filled into a mold without performing any particular pretreatment and heated with steam to fuse together.

In the method for producing a polypropylene resin in-mold expanded molded product in accordance with one embodiment of the present invention, it is preferable that the molding cycle be short. Specifically, it is preferable that molding cycle time reduction, which will be described later in detail in Examples, be large in value. The molding cycle time reduction in the method for producing a polypropylene resin in-mold expanded molded product in accordance with one embodiment of the present invention is not particularly limited, but is preferably 6% or greater, more preferably 7% or greater, even more preferably 8% or greater, particularly preferably 10% or greater. The upper limit of the molding cycle time reduction in accordance with one embodiment of the present invention is not particularly limited, provided that the resulting in-mold expanded molded product has good surface appearance, good dimensional accuracy, and the like.

The dimensional accuracy of a polypropylene resin in-mold expanded molded product in accordance with one embodiment of the present invention is represented by the percentage of shrinkage of the polypropylene resin in-mold expanded molded product, which will be described later in detail in Examples. The percentage of shrinkage of the polypropylene resin in-mold expanded molded product in accordance with one embodiment of the present invention is preferably 0% or greater and less than 2.6%, more preferably 0% or greater and less than 2.3%, even more preferably 0% or greater and less than 2%, from the viewpoint of usage of the in-mold expanded molded product.

The polypropylene resin in-mold expanded molded product in accordance with one embodiment of the present invention has a density of preferably 10 g/L or greater and 60 g/L or less, more preferably 11 g/L or greater and 59 g/L or less.

When the density of the polypropylene resin in-mold expanded molded product is 10 g/L or greater, an obtained effect is that the weight reduction of the resulting in-mold expanded molded product is satisfactory. When the density is 60 g/L or less, an obtained effect is that the in-mold expanded molded product has practical mechanical strength such as practical compressive strength.

The compressive strength of the polypropylene resin in-mold expanded molded product in accordance with one embodiment of the present invention is represented by a 50%-strained compressive strength, which will be described later in detail in Examples. The 50%-strained compressive strength of the polypropylene resin in-mold expanded molded product in accordance with one embodiment of the present invention is preferably 0.22 MPa or greater, more preferably 0.23 MPa or greater, even more preferably 0.24 MPa or greater, from the viewpoint of usage of the in-mold expanded molded product. The upper limit of the 50%-strained compressive strength in accordance with one embodiment of the present invention is not particularly limited, provided that the in-mold expanded molded product has good surface appearance, good dimensional accuracy, and the like.

The open cell ratio of the polypropylene resin in-mold expanded molded product in accordance with one embodiment of the present invention is not particularly limited, and is preferably 0% or greater and 10% or less from the viewpoint of the surface appearance and strength of the in-mold expanded molded product.

The polypropylene resin in-mold expanded molded product in accordance with one embodiment of the present invention may be used in various applications such as not only car interior materials and car bumper core materials but also heat insulators, shock-absorbing packing materials, and returnable containers.

As has been described, according to one embodiment of the present invention, the cell diameter of expanded polypropylene resin particles is prevented from becoming fine or becoming too fine, and therefore the expandability of expanded particles does not tend to decrease even with a relatively low molding pressure in the method for producing an in-mold expanded molded product. This provides a polypropylene resin in-mold expanded molded product having excellent surface appearance.

Furthermore, the polypropylene resin in-mold expanded molded product obtained from the expanded polypropylene resin particles containing as a base resin a polypropylene resin (X) having a flexural modulus of 1200 MPa or greater and 1700 MPa or less, more preferably 1200 MPa or greater and 1550 MPa or less, tends to have high compressive strength, and therefore is suitable for use in applications that require high rigidity such as bumpers and in applications that require durability such as returnable containers. In addition, a more lightweight polypropylene resin in-mold expanded molded product can be obtained.

Examples

The following description will discuss one embodiment of the present invention in more detail with Examples and Comparative Examples. Note, however, that the one embodiment of the present invention is not limited to these Examples.

Substances used in Examples and Comparative Examples are as provided below.

- Polypropylene resin A [trial product from polypropylene resin manufacturer: propylene-ethylene random copolymer containing ethylene as comonomer in an amount of 2.5 weight%, having an MFR of 8 g/10min., and having a melting point of 151°C]
- Polypropylene resin B [trial product from polypropylene resin manufacturer: propylene-1-butene-ethylene random copolymer containing 1-butene as comonomer in an amount of 3.3 weight%, containing ethylene as comonomer in an amount of 1.1 weight%, having an MFR of 9 g/ 10min., and having a melting point of 148°C]
- Polypropylene resin C [trial product from polypropylene resin manufacturer: homopolypropylene having an MFR of 8 g/ 10min. and having a melting point of 163°C]

The copolymer compositions of the polypropylene resins A, B, and C were quantitatively determined in the following manner.

To a polypropylene resin (about 1 g), 50 g of xylene was added and heated at 120°C so that the polypropylene resin dissolved, and separated into insoluble and soluble fractions with the use of a high-temperature centrifuge (a centrifuge available from KOKUSAN Co., LTd., H175) at 12000 rpm for 30 minutes. The obtained soluble fraction was cooled, and then centrifuged (at 12000 rpm for 30 minutes) to obtain an insoluble fraction. To 50 mg of the obtained insoluble fraction, 0.4 g of ortho-dichlorobenzene-$d_4$ was added, and heated at 100°C so that the insoluble fraction dissolved, and subjected to $^{13}$C-MNR spectrometry [INOVA AS600 available from VARIAN] at 98°C. In this way, the composition of a copolymer containing 1-butene and ethylene was quantified.

- High density polyethylene resin A [trial product from polyethylene resin manufacturer: MFR is 5 g/10min., melting point is 130°C, and density is 0.953 g/cm$^3$]
- High density polyethylene resin B [trial product from polyethylene resin manufacturer: MFR is 7 g/10min., melting point is 133°C, and density is 0.963 g/cm$^3$]
- High density polyethylene resin C [trial product from polyethylene resin manufacturer: MFR is 3 g/10min., melting point is 135°C, and density is 0.968 g/cm$^3$]
- High density polyethylene resin D [trial product from polyethylene resin manufacturer: MFR is 0.3 g/10min., melting point is 126°C, and density is 0.944 g/cm$^3$]
- Linear low-density polyethylene resin [trial product from polyethylene resin manufacturer: MFR is 2 g/10min., melting point is 121°C, and density is 0.925 g/cm$^3$]
- Talc [available from Hayashi-Kasei Co., Ltd.]: Talcan Powder PK-S
- Polyethylene glycol: PEG#300 available from Lion Corporation
- Carbon black: MCF88 (average particle diameter 18 nm) available from Mitsubishi Chemical Corporation The evaluations on Examples and Comparative Examples were performed in the following manner.

(Measurement of melting point of polypropylene resin)

The melting point tm of a polypropylene resin (X) was determined in the following manner: with the use of a differential scanning calorimeter DSC (available from Seiko Instruments Inc., model: DSC6200), 5 to 6 mg of the polypropylene resin was heated from 40°C to 220°C at a heating rate of 10°C/min. so that resin particles melted, and then cooled from 220°C to 40°C at a cooling rate of 10°C/min. so that crystallization occurred, and then again heated from 40°C to 220°C at a heating rate of 10°C/min. to obtain a DSC curve; and the temperature at the melting peak on the DSC curve obtained in the second temperature rise was used as the melting point (refer to "tm" in Figs. 3 and 4). It is noted that, in a case where two melting peaks appear on the DSC curve in the second temperature rise, the temperature at the melting peak with greater heat absorption quantity was used as "tm".

(Flexural modulus of polyethylene resin or of polypropylene resin particles)

The flexural modulus was measured by: drying the earlier-described high density polyethylene resin or linear low-density polyethylene resin or the resulting polypropylene resin (X) at 80°C for 6 hours; then preparing a bar having a thickness of 6.4 mm (a width of 12.7 mm and a length of 127 mm) by use of a 35t injection molding machine at a cylinder temperature of 200°C and a mold temperature of 30°C; and performing a flexural test with respect to the bar in accordance with ASTM D790 within a week of the preparation of the bar.

(Calculation of high-temperature heat quantity ratio of expanded polypropylene resin particles)

The high-temperature heat quantity ratio [$=\{Qh/(Q1+Qh)\}\times100(\%)$] was calculated based on the DSC curve (refer to Figs. 1 and 2) obtained with the use of a differential scanning calorimeter (available from Seiko Instruments Inc., model: DSC6200) by heating 5 mg to 6 mg of the expanded polypropylene resin particles from 40°C to 220°C at a heating rate of 10°C/min.

As shown in Fig. 1, the entire melting heat quantity (Q=Q1+Qh), which is the sum of the low-temperature-side melting heat quantity (Ql) and the high-temperature-side melting heat quantity (Qh), is, on the obtained DSC curve, represented by the area enclosed by line segment A-B and the DSC curve. Line segment A-B connects point A (heat absorption quantity at 80°C) and point B (heat absorption quantity at the temperature at which high-temperature-side melting ends).

The low-temperature-side melting heat quantity (Ql) is represented by the area enclosed by line segment A-D, line segment C-D, and the DSC curve, and the high-temperature-side melting heat quantity (Qh) is represented by the area enclosed by line segment B-D, line segment C-D, and the DSC curve. Point C is the point at which the heat absorption quantity is smallest between the following two melting heat quantity regions: the low-temperature-side melting heat quantity (Ql) and the high-temperature-side melting heat quantity (Qh), on the DSC curve. Point D is the intersection of line segment A-B and a line that extends from point C in a direction perpendicular to line segment A-B.

It is noted that, in a case where three melting peaks appear as illustrated in Fig. 2, there are two points that can serve as the smallest heat absorption quantity between two adjacent melting heat quantity regions. In such a case, the point at the high-temperature side was used as point C.

(Average cell diameter of expanded polypropylene resin particles)

An expanded polypropylene resin particle was cut substantially at the center while ensuring that foam membranes of the expanded polypropylene resin particle were not broken, and the cut surface was observed under a microscope [VHX digital microscope available from Keyence Corporation].

On the image obtained under the microscope, a line segment representing a length of 1000 $\mu$m was drawn within the cut surface so as not to overlap the outer layer, the number (n) of cells on the line segment was counted, and the cell diameter was calculated using "1000/n (pm)". The same operation was performed on ten expanded particles, and the mean of the cell diameters of the ten particles was used as the average cell diameter of the expanded polypropylene resin particles.

(Open cell ratio of expanded polypropylene resin particles)

The obtained expanded polypropylene resin particles were measured for volume Vc ($cm^3$) with the use of an air comparison pycnometer (model 1000 available from TOKYO SCIENCE.) in accordance with the method defined in PROCEDURE C of ASTM D2856-87.

After the measurement of Vc, these expanded polypropylene resin particles were entirely submerged in ethanol in a graduated cylinder, and the apparent volume Va ($cm^3$) of the expanded polyethylene resin particles was determined from the difference in the liquid level of the graduated cylinder (submersion method).

The open cell ratio of the expanded polypropylene resin particles was calculated using the following equation:

$$\mathrm{Open\ cell\ ratio\ (\%) = (Va - Vc) \times 100/Va}$$

(Expansion ratio of expanded polypropylene resin particles)

About 3 g or more and 10 g or less of the obtained expanded polypropylene resin particles were dried at 60°C for 6 hours, and then subjected to conditioning indoors at 23°C and at a humidity of 50%. Then, the weight w (g) of the expanded polypropylene resin particles was measured, and then the volume v ($cm^3$) of the expanded polypropylene resin particles was found by the submersion method, and the absolute specific gravity (pb=w/v) of the expanded polypropylene resin particles was obtained. Then, based on the ratio to the density (pr) of the unfoamed polypropylene resin particles, the expansion ratio (K=pr/pb) was calculated.

Note that in each of Examples and Comparative Examples below, the density (pr) of unfoamed polypropylene resin particles (i.e., polypropylene resin particles) was 0.90 $g/cm^3$.

(Evaluation of moldability of polypropylene resin in-mold expanded molded product)

The moldability of a polypropylene resin in-mold expanded molded product in accordance with one embodiment of the present invention includes not only the surface appearance (flat portion), surface appearance (edge portion), and dimensional accuracy of the in-mold expanded molded product but also the minimum molding pressure (gage pressure) and molding cycle time reduction in the method for producing a polypropylene resin in-mold expanded molded product.

With the use of a polypropylene foaming molding machine (available from DAISEN Co., Ltd., KD-345), a mold having a size of length 300 mm × width 400 mm × thickness 50 mm was filled with expanded polypropylene resin particles which had been prepared in advance so as to have an internal air pressure as shown in Table 1 and the expanded particles were heat molded by compressing by 10% in the thickness direction. In this way, a polypropylene resin in-mold expanded molded product was obtained.

The polypropylene resin in-mold expanded molded product obtained was left at room temperature for 1 hour and then cured and dried in a thermostatic chamber at 75°C for 3 hours, and brought out of the chamber and left at room temperature for 24 hours. Then, the fusibility, surface appearance, and dimensional accuracy of the molded product were evaluated and the density and 50%-strained compressive strength of the molded product were measured.

It is noted that, in the method for producing an in-mold expanded molded product, molding was performed while changing the molding pressure (steam pressure) in increments of 0.01 MPa in an autoclave step, and the minimum molding pressure that enables molding of an in-mold expanded molded product having a "Good" or "Excellent" grade in the following <Fusibility> evaluation was used as the minimum molding pressure. The in-mold expanded molded product molded at this minimum molding pressure was evaluated for surface appearance and dimensional accuracy and was measured for density and 50%-strained compressive strength as described below.

<Fusibility>

A 5 mm deep cut was made in the thickness direction in the obtained in-mold expanded molded product with a cutter, and then the in-mold expanded molded product was cleaved by hand. The cleaved surface was visually checked, and the percentage of broken expanded particles (not the particles separated at interfaces) was calculated. Then, fusibility was judged by the following criteria.
Excellent: The percentage of broken expanded particles was 80% or more.
Good: The percentage of broken expanded particles was 60% or more and less than 80%.
Failed: The percentage of broken expanded particles was less than 60% (degree of fusion was so low that the percentage of the surfaces of expanded particles appearing at the cleaved surface was 40% or more).

<Surface appearance (flat portion)>

A 300 mm × 400 mm surface of the obtained in-mold expanded molded product was visually checked, and the surface appearance was judged by the following criteria. In regard to inter-particle spaces (spaces between expanded polypropylene resin particles) of surface appearance, the number of inter-particle spaces within a 50 mm × 50 mm square at the center of the surface of the in-mold expanded molded product was counted visually and the surface appearance was judged based on this number.
Excellent (E): The number of inter-particle spaces is 0 to 2, there is no noticeable surface unevenness, and there is no wrinkle or shrinkage and therefore the surface is beautiful. Good (G): The number of inter-particle spaces is 3 to 5, there is no noticeable surface unevenness, and there is no shrinkage or wrinkles and therefore the surface is beautiful.
Failed (F): The number of inter-particle spaces is 6 or more, or surface unevenness, shrinkage, or wrinkles are somewhat noticeable.

<Surface appearance (edge portion)>

In regard to the obtained in-mold expanded molded product, its edge portions (ridge portions) where a 300 mm × 400mm surface meets another surface were visually checked, and the surface appearance was judged by the following criteria. In regard to inter-particle spaces (spaces between expanded polypropylene resin particles) of surface appearance, the number of dents at edge portions (ridge portions) along the length and width of the in-mold expanded molded product was counted visually, and the surface appearance was judged on the basis of this number.
Good (G): The number of dents resulting from expanded polypropylene resin particles is 0 to 5 at each of the edge portions (ridge portions) where faces of the in-mold expanded molded product meet. The ridges look good and mold transferability is good. In addition, no expanded particles come off even when the edge portions are rubbed with a finger.
Failed (F): The number of dents resulting from expanded polypropylene resin particles is 6 or more at the edge portions (ridge portions). The dents are noticeable and mold transferability is poor.

<Molding cycle time reduction>

The molding cycle time in the method for producing a polypropylene resin in-mold expanded molded product is time from when the molting starts to when the molding ends with the release of a molded product. The molding cycle time reduction was determined based on molding cycle time $[T_0$ (seconds)] and molding cycle time $[T_1$ (seconds)] using the following equation.

Molding cycle time reduction (%) = $(T_0 - T_1) / T_0 \times 100$ The molding cycle time $[T_0$ (seconds)] is molding cycle time in the method for producing a polypropylene resin in-mold expanded molded product from expanded polypropylene resin particles obtained from a polypropylene resin (I) alone as a base resin (without a high density polyethylene resin (II)) by using carbon dioxide as a foaming agent. The molding cycle time $[T_1$ (seconds)] is molding cycle time in the method for producing a polypropylene resin in-mold expanded molded product from expanded polypropylene resin particles obtained from a polypropylene resin containing not only the polypropylene resin (I) but also a certain amount of the high density polyethylene resin (II) as a base resin by using carbon dioxide as a foaming agent.
The molding cycle is defined as below. Assume that the point in time at which the expanded polypropylene resin particles start being fed into a mold is the start of molding. Heating is performed by feeding steam into the mold, and then the molded product is water-cooled, the mold is opened when the contact pressure obtained using a contact pressure meter attached to the surface of the plank mold reaches 0.05 MPa. Assume that the point in time at which the release of the molded product has finished is the end of molding. The molding cycle is time from the start of molding to the end of molding. Steam heating pressure used in the comparison was the minimum molding pressure.

A greater molding cycle time reduction means better productivity.

<Dimensional accuracy of molded product>

The length of the obtained in-mold expanded molded product was measured, and the percentage of shrinkage of the in-mold expanded molded product relative to the length (400 mm) of the mold was calculated. The dimensional accuracy of the molded product was evaluated based on this percentage of shrinkage.

$$\text{Percentage of shrinkage (\%)} = (400 \text{ (mm)} - \text{length of molded product (mm)}) / 400 \text{ (mm)} \times 100$$

Excellent (E): Percentage of shrinkage is 2% or less.
Good (G): Percentage of shrinkage is 2% or greater and less than 2.3%.
Average (A): Percentage of shrinkage is 2.3% or greater and less than 2.6%.
Poor (P): Percentage of shrinkage is 2.6% or greater.

(Evaluation of quality of in-mold expanded molded product)

The quality of a polypropylene resin in-mold expanded molded product in accordance with one embodiment of the present invention includes density of the molded product, 50%-strained compressive strength, and open cell ratio.

<Density of molded product>

A test piece having a size of length 50 mm × width 50 mm × thickness 25 mm was cut from around the center of the in-mold expanded molded product. Note that a thickness of approximately 12.5 mm was removed from each of the front and back surface layers of the in-mold expanded molded product to obtain the test piece having a thickness of 25 mm. The weight W (g) of the test piece was measured, and the length, width, and thickness of the test piece were measured with the use of a caliper, and the volume V ($cm^3$) of the test piece was calculated. Then, the density of the molded product is obtained using W/V. Note, however, that a conversion was made so that the unit was g/L.

<50%-strained compressive strength>

After the density of the test piece of the molded product was measured, the compressive stress of this test piece when compressed by 50% at a rate of 10 mm/min. was measured with the use of a tension and compression testing machine [available from Minebea, TG series] in accordance with NDZ-Z0504.

(Open cell ratio of in-mold expanded molded product)

A test piece having a size of length 25 mm × width 25 mm × thickness 35 mm was cut from around the center of the obtained in-mold expanded molded product, and this test piece was measured for volume $Vc_2$ ($cm^3$) with the use of an air comparison pycnometer (model 1000 available from TOKYO SCIENCE.) in accordance with the method defined in PROCEDURE C of ASTM D2856-87.
After the measurement of Vc, this in-mold expanded molded product was entirely submerged in ethanol in a graduated cylinder, and the apparent volume $Va_2$ ($cm^3$) of the in-mold expanded molded product was determined from the difference in the liquid level of the graduated cylinder (submersion method).
The open cell ratio of the in-mold expanded molded product was calculated using the following equation.

$$\text{Open cell ratio (\%)} = (Va_2 - Vc_2) \times 100 / Va_2$$

(Example 1)

[Preparation of polypropylene resin particles]

A polypropylene resin A (as a polypropylene resin (I)) in an amount of 95 parts by weight, a high density polyethylene resin A (as a high density polyethylene resin (II)) in an amount of 5 parts by weight, a polyethylene glycol (as a hydrophilic compound) in an amount of 0.5 parts by weight, and talc (as a foam nucleating agent) in an amount of 0.05 parts by weight were mixed together. The obtained mixture was melted and kneaded at a resin temperature of 220°C and extruded in a strand shape with the use of a twin-screw extruder (TEK45 available from O. N. Machinery Co., Ltd.). The strand thus extruded was water-cooled in a water tank having a length of 2 m, and was then cut. This resulted in polypropylene resin particles (1.2 mg per particle). Flexural modulus was evaluated using these polypropylene resin particles as described earlier, and the result is shown in Table 1 as the flexural modulus of a polypropylene resin (X).

[Preparation of first-step expanded particles]

100 parts by weight of the polypropylene resin particles obtained, 300 parts by weight of water, 1.5 parts by weight of powdered basic tertiary calcium phosphate (as a dispersing agent), 0.06 parts by weight of n-paraffin sodium sulfonate (as a dispersion auxiliary agent), and 7.5 parts by weight of carbon dioxide (as a foaming agent) were placed in a 10 L pressure-resistant container. While the mixture was stirred, the temperature was raised to a foaming temperature shown in Table 1 and the temperature was maintained for 10 min. Then, carbon dioxide was additionally injected into the pressure-resistant container and thereby the pressure was adjusted to a foaming pressure shown in Table 1. Then, the pressure was maintained for 30 min.
Then, a valve at a lower part of the pressure-resistant container was opened while carbon dioxide was injected into the pressure-resistant container and the temperature and pressure inside the pressure-resistant container were maintained, whereby the aqueous dispersion medium was released into air under atmospheric pressure through an orifice plate having an opening diameter of 3.6 mm. In this way, expanded polypropylene resin particles (first-step expanded particles) were obtained. The obtained first-step expanded particles were measured for high-temperature heat quantity ratio, average cell diameter, open cell ratio, and expansion ratio. The results are shown in Table 1.

[Preparation of in-mold expanded molded product]

The obtained first-step expanded particles were introduced into a pressure-resistant container, and pressurized air was impregnated into the expanded particles and thereby the internal pressure of the expanded particles was adjusted in advance as shown in Table 1. Then, these expanded polypropylene resin particles were filled into a mold having a size of length 300 mm × width 400 mm × thickness 50 mm with a gap of 5 mm in the mold, and the expanded particles were heat molded by compressing by 10% in the thickness direction. In this way, a polypropylene resin in-mold expanded molded product was obtained. In doing so, after the mold was filled with the expanded polypropylene resin particles and the mold was then completely closed, the air in the mold was first purged by use of steam of 0.1 MPa (gage pressure) (preheating step), and thereafter the particles were heat-molded (autoclave step) with heating steam of the premeasured minimum molding pressure for 10 seconds, such that an in-mold expanded molded product was obtained. The preheating step was performed for 10 seconds, the cross steaming step was performed for 2 seconds, the counter cross steaming step was performed for 2 seconds, and the autoclave step was performed for 10 seconds as described above.
The results of measurements of molding cycle time reduction, surface appearance, dimensional accuracy of molded product, density of molded product, and 50%-strained compressive strength are shown in Table 1.

(Example 2)

The same operations as described in Example 1 were performed, except that the mixing ratio of the polypropylene resin (I) to the high density polyethylene resin (II) was changed to 90/10 in [Preparation of polypropylene resin particles]. In this way, polypropylene resin particles, expanded polypropylene resin particles, and a polypropylene in-mold expanded molded product were obtained. The conditions in which these were produced and the results of evaluations are shown in Table 1.

(Example 3)

The same operations as described in Example 2 were performed, except that the polypropylene resin (I) was changed to a polypropylene resin B in [Preparation of polypropylene resin particles]. In this way, polypropylene resin particles, expanded polypropylene resin particles, and a polypropylene in-mold expanded molded product were obtained.

The conditions in which these were produced and the results of evaluations are shown in Table 1.

(Example 4)

The same operations as described in Example 2 were performed, except that the polypropylene resin (X) in [Preparation of polypropylene resin particles] was a polypropylene resin (X) having a tm of 155°C and an MFR of 8 g/10min. in which: the polypropylene resin A and a polypropylene resin C were used as the polypropylene resin (I); and the polypropylene resin A, the polypropylene resin C, and the high density polyethylene resin A were mixed at a mixing ratio of 80/10/10. In this way, polypropylene resin particles, expanded polypropylene resin particles, and a polypropylene in-mold expanded molded product were obtained. The conditions in which these were produced and the results of evaluations are shown in Table 1.

(Example 5)

The same operations as described in Example 1 were performed, except that the high density polyethylene resin (II) was changed to a high density polyethylene resin B in [Preparation of polypropylene resin particles]. In this way, polypropylene resin particles, expanded polypropylene resin particles, and a polypropylene in-mold expanded molded product were obtained. The conditions in which these were produced and the results of evaluations are shown in Table 1.

(Example 6)

The same operations as described in Example 1 were performed, except that the high density polyethylene resin (II) was changed to a high density polyethylene resin C in [Preparation of polypropylene resin particles]. In this way, polypropylene resin particles, expanded polypropylene resin particles, and a polypropylene in-mold expanded molded product were obtained. The conditions in which these were produced and the results of evaluations are shown in Table 1.

(Example 7)

The same operations as described in Example 1 were performed, except that 5 parts by weight of carbon black was added in [Preparation of polypropylene resin particles]. In this way, polypropylene resin particles, expanded polypropylene resin particles, and a polypropylene in-mold expanded molded product were obtained. The conditions in which these were produced and the results of evaluations are shown in Table 1.

(Example 8)

The same operations as described in Example 1 were performed, except that the high density polyethylene resin (II) was changed to a high density polyethylene resin D in [Preparation of polypropylene resin particles]. In this way, polypropylene resin particles, expanded polypropylene resin particles, and a polypropylene in-mold expanded molded product were obtained. The conditions in which these were produced and the results of evaluations are shown in Table 1.

(Example 9)

The same operations as described in Example 1 were performed, except that the amount of talc as a foam nucleating agent was changed to 0.10 parts by weight in [Preparation of polypropylene resin particles]. In this way, polypropylene resin particles, expanded polypropylene resin particles, and a polypropylene in-mold expanded molded product were obtained. The conditions in which these were produced and the results of evaluations are shown in Table 1.

(Example 10)

The same operations as described in Example 1 were performed, except that the amount of talc as a foam nucleating agent was changed to 0 parts by weight in [Preparation of polypropylene resin particles]. In this way, polypropylene resin particles, expanded polypropylene resin particles, and a polypropylene in-mold expanded molded product were obtained. The conditions in which these were produced and the results of evaluations are shown in Table 1.

(Example 11)

The same operations as described in Example 1 were performed, except that the foam nucleating agent was changed to 0.05 parts by weight of silica in [Preparation of polypropylene resin particles]. In this way, polypropylene resin particles, expanded polypropylene resin particles, and a polypropylene in-mold expanded molded product were obtained. The conditions in which these were produced and the results of evaluations are shown in Table 1.

(Comparative Example 1)

The same operations as described in Example 1 were performed, except that the mixing ratio of the polypropylene resin (I) to the high density polyethylene resin (II) was changed to 100/0 (that is, 100 parts by weight polypropylene resin A was used) in [Preparation of polypropylene resin particles]. In this way, polypropylene resin particles, expanded polypropylene resin particles, and a polypropylene in-mold expanded molded product were obtained. The conditions in which these were produced and the results of evaluations are shown in Table 1.

(Comparative Example 2)

The same operations as described in Example 1 were performed, except that the mixing ratio of the polypropylene resin (I) to the high density polyethylene resin (II) was changed to 80/20 in [Preparation of polypropylene resin particles]. In this way, polypropylene resin particles, expanded polypropylene resin particles, and a polypropylene in-mold expanded molded product were obtained. The conditions in which these were produced and the results of evaluations are shown in Table 1.

(Comparative Example 3)

The same operations as described in Example 1 were performed, except that a linear low-density polyethylene resin was used in place of the high density polyethylene resin (II) in [Preparation of polypropylene resin particles]. In this way, polypropylene resin particles, expanded polypropylene resin particles, and a polypropylene in-mold expanded molded product were obtained. The conditions in which these were produced and the results of evaluations are shown in Table 1.

(Comparative Example 4)

The same operations as described in Example 3 were performed, except that the mixing ratio of the polypropylene resin (I) to the high density polyethylene resin (II) was changed to 100/0 (that is, 100 parts by weight polypropylene resin B was used) in [Preparation of polypropylene resin particles]. In this way, polypropylene resin particles, expanded polypropylene resin particles, and a polypropylene in-mold expanded molded product were obtained. The conditions in which these were produced and the results of evaluations are shown in Table 1.

(Comparative Example 5)

The same operations as described in Comparative Example 1 were performed, except that 5 parts by weight of carbon black was added in [Preparation of polypropylene resin particles]. In this way, polypropylene resin particles, expanded polypropylene resin particles, and a polypropylene in-mold expanded molded product were obtained. The conditions in which these were produced and the results of evaluations are shown in Table 1.

(Comparative Example 6)

The same operations as described in Example 1 were performed, except that the foaming agent was changed from carbon dioxide to isobutane in [Preparation of polypropylene resin particles]. In this way, polypropylene resin particles, expanded polypropylene resin particles, and a polypropylene in-mold expanded molded product were obtained. The conditions in which these were produced and the results of evaluations are shown in Table 1.

(Comparative Example 7)

The same operations as described in Example 1 were performed, except that the foam nucleating agent was changed to 0.05 parts by weight of talc and 0.05 parts by weight of silica in [Preparation of polypropylene resin particles]. In this way, polypropylene resin particles, expanded polypropylene resin particles, and a polypropylene in-mold expanded

22

molded product were obtained. The conditions in which these were produced and the results of evaluations are shown in Table 1.

[Table 1]

| | | | | Examples | | | | | | | | | | | Comparative Examples | | | | | | |
|---|---|---|---|---|---|---|---|---|---|---|---|---|---|---|---|---|---|---|---|---|---|---|
| | | | | 1 | 2 | 3 | 4 | 5 | 6 | 7 | 8 | 9 | 10 | 11 | 1 | 2 | 3 | 4 | 5 | 6 | 7 |
| Polypropylene resin particles | Polypropylene resin (I) | Polypropylene resin A | parts by weight | 95 | 90 | | 80 | 95 | 95 | 95 | 95 | 95 | 95 | 95 | 100 | 80 | 95 | | 100 | 95 | 95 |
| | | Polypropylene resin B | parts by weight | | | 90 | | | | | | | | | | | | 100 | | | |
| | | Polypropylene resin C | parts by weight | | | | 10 | | | | | | | | | | | | | | |
| | | Melting point | °C | 151 | 151 | 148 | 155 | 151 | 151 | 151 | 151 | 151 | 151 | 151 | 151 | 151 | 151 | 148 | 151 | 151 | 151 |
| | | Melt flow rate | g/10min. | 8 | 8 | 9 | 7 | 8 | 8 | 8 | 8 | 8 | 8 | 8 | 8 | 8 | 8 | 9 | 8 | 8 | 8 |
| | High density polyethylene resin (II) | High density polyethylene resin A | parts by weight | 5 | 10 | 10 | 10 | | | 5 | | 5 | 5 | 5 | | 20 | | | | 5 | 5 |
| | | High density polyethylene resin B | parts by weight | | | | | 5 | | | | | | | | | | | | | |
| | | High density polyethylene resin C | parts by weight | | | | | | 5 | | | | | | | | | | | | |
| | | High density polyethylene resin D | parts by weight | | | | | | | | 5 | | | | | | | | | | |
| | | Linear low-density polyethylene | parts by weight | | | | | | | | | | | | | | | 5 | | | |

EP 3 339 358 B1

| | | | | 1000 | 1000 | 1000 | 1000 | 1050 | 1300 | 1000 | 850 | 1000 | 1000 | 1000 | - | 1000 | 400 | - | - | 1000 | 1000 |
|---|---|---|---|---|---|---|---|---|---|---|---|---|---|---|---|---|---|---|---|---|---|---|
| | | resin | | | | | | | | | | | | | | | | | | | | |
| | | Flexural modulus | MPa | 1000 | 1000 | 1000 | 1000 | 1050 | 1300 | 1000 | 850 | 1000 | 1000 | 1000 | - | 1000 | 400 | - | - | 1000 | 1000 |
| | Additive | Talc | parts by weight | 0.05 | 0.05 | 0.05 | 0.05 | 0.05 | 0.05 | 0.05 | 0.05 | 0.10 | 0.00 | | 0.05 | 0.05 | 0.05 | 0.05 | 0.05 | 0.05 | 0.05 |
| | | Silica | parts by weight | | | | | | | | | | | 0.05 | | | | | | | 0.05 |
| | | PEG | parts by weight | 0.5 | 0.5 | 0.5 | 0.5 | 0.5 | 0.5 | 0.5 | 0.5 | | | | 0.5 | 0.5 | 0.5 | 0.5 | 0.5 | 0.5 | 0.5 |
| | | Carbon black | parts by weight | | | | | | | 5 | | | | | | | | | 5 | | |
| | Polypropylene resin (X) | Melting point tm | °C | 151 | 151 | 148 | 155 | 151 | 151 | 151 | 151 | 151 | 151 | 151 | 151 | 150 | 151 | 148 | 151 | 151 | 151 |
| | | Flexural modulus | MPa | 1280 | 1250 | 1300 | 1350 | 1300 | 1330 | 1250 | 1200 | 1280 | 1280 | 1280 | 1350 | 1000 | 1200 | 1400 | 1300 | 1280 | 1280 |
| First-step expanded particles | Foaming conditions | Amount of carbon dioxide | parts by weight | 7.5 | 7.5 | 7.5 | 7.5 | 7.5 | 7.5 | 7.5 | 7.5 | 7.5 | 7.5 | 7.5 | 7.5 | 7.5 | 7.5 | 7.5 | 7.5 | - | 7.5 |
| | | Amount of isobutane | parts by weight | - | - | - | - | - | - | - | - | - | - | - | - | - | - | - | - | 152 | - |
| | | Foaming temperature | °C | 152 | 152 | 149 | 156 | 152 | 152 | 152 | 151 | 152 | 152 | 152 | 152 | 151 | 152 | 149 | 152 | 133 | 152 |
| | | Foaming pressure (gage pressure) | MPa | 3.4 | 3.4 | 3.4 | 3.4 | 3.4 | 3.4 | 3.4 | 3.4 | 3.4 | 3.4 | 3.4 | 3.4 | 3.4 | 3.4 | 3.3 | 3.4 | 2.5 | 3.4 |
| | Quality | High- | % | 21 | 22 | 21 | 25 | 22 | 23 | 20 | 19 | 22 | 20 | 21 | 21 | 21 | 20 | 21 | 20 | 19 | 20 |

| | Property | Unit | | | | | | | | | | | | | | | | | | |
|---|---|---|---|---|---|---|---|---|---|---|---|---|---|---|---|---|---|---|---|---|---|
| | temperature heat quantity ratio | | 170 | 175 | 175 | 130 | 160 | 180 | 120 | 170 | 140 | 210 | 160 | 85 | 140 | 65 | 90 | 70 | 350 | 150 |
| | Average cell diameter | μm | 2.0 | 3.0 | 4.0 | 3.0 | 2.0 | 3.0 | 2.0 | 2.0 | 2.5 | 2.5 | 2.0 | 2.0 | 12.0 | 2.0 | 3.5 | 3.0 | 4.5 | 2.5 |
| | Open cell ratio | % | 19 | 21 | 21 | 20 | 19 | 22 | 18 | 19 | 21 | 18 | 20 | 19 | 17 | 18 | 20 | 19 | 19 | 19 |
| | Expansion ratio | times | – | – | – | – | – | – | – | – | – | – | – | – | – | – | – | – | – | – |
| Molda-bility | Molding cycle time reduction | % | 7 | 14 | 8 | 17 | 8 | 8 | 7 | 8 | 6 | 7 | 7 | – | 40 | 3 | – | 0 | -20 | -4 |
| | Minimum molding pressure (gage pressure) | MPa | 0.23 | 0.22 | 0.21 | 0.25 | 0.23 | 0.23 | 0.23 | 0.22 | 0.23 | 0.23 | 0.23 | 0.26 | 0.22 | 0.24 | 0.28 | 0.26 | 0.23 | 0.23 |
| | Surface appearance — Flat portion | - | G | G | G | G | G | G | G | G | G | G | G | F | F | F | F | F | G | E |
| | Surface appearance — Edge portion | - | G | G | G | G | G | G | G | G | G | G | G | F | F | F | F | F | F | G |
| | Dimensional accuracy of molded product | - | E | E | E | E | G | G | E | E | E | E | E | G | A | G | G | G | G | A |
| In-mold expanded molded product / Quality | Density of molded product | g/L | 25 | 24 | 24 | 25 | 25 | 24 | 27 | 25 | 24 | 27 | 25 | 26 | 30 | 26 | 25 | 26 | 26 | 25 |
| | 50%-strained compressive strength | MPa | 0.23 | 0.23 | 0.23 | 0.24 | 0.24 | 0.24 | 0.23 | 0.22 | 0.23 | 0.23 | 0.23 | 0.23 | 0.18 | 0.23 | 0.23 | 0.23 | 0.21 | 0.23 |
| | Open cell ratio | % | 8.0 | 8.0 | 8.0 | 8.0 | 7.0 | 6.0 | 8.0 | 9.0 | 8.0 | 8.0 | 8.0 | 6.0 | 18.0 | 8.0 | 7.0 | 8.0 | 9.0 | 10.0 |

Example 1 uses a base resin (polypropylene resin (X)) that contains the high density polyethylene resin (II) in an amount of 5 weight%. The in-mold expanded molded product obtained in Example 1 has high compressive strength and, in addition, has good surface appearance and a molding cycle reduced by 7% in comparison with Comparative Example 1 in which the high density polyethylene resin (II) is not contained. Example 1 was found to bring about the effects of one embodiment of the present invention.

Likewise, Example 2, which used a base resin (polypropylene resin (X)) containing the high density polyethylene resin (II) in an amount of 10 weight%, had a molding cycle time reduction of 14%. The molding cycle was even shorter than Example 1. Furthermore, the obtained in-mold expanded molded product was found to have good surface appearance and high compressive strength. Similar effects were obtained also in Examples 3 and 4, in which the polypropylene resin (I) having a different composition was used.

Similar effects were obtained also in Examples 5, 6, and 8, in which a different kind of high density polyethylene (II) was used and the amount of the high density polyethylene (II) added was 5 parts by weight%.

Also in Example 7, in which carbon black was contained in 5 parts by weight%, surface appearance was found to be good.

In Examples 9 and 10, in which the amount of talc as a foam nucleating agent was changed to 0.10 parts by weight or 0 parts by weight, similar effects were obtained.

In Example 11, in which silica as a foam nucleating agent was contained in an amount of 0.05 parts by weight, similar effects were obtained.

Comparative Example 2 used a base resin (polypropylene resin (X)) containing an excess amount (20 weight%) of the high density polyethylene resin (II). This resulted in an in-mold expanded molded product having poor surface appearance and reduced compressive strength.

Comparative Example 3 used a base resin containing a linear low-density polyethylene instead of the high density polyethylene (II). This resulted in fine average cell diameter and very poor surface appearance.

Comparative Examples 4 and 5 contained no high density polyethylene. This resulted in unimproved surface appearance.

Comparative Example 6, which used isobutane as a foaming agent, resulted in large average cell diameter. As a result, in the method for producing an in-mold expanded molded product, the molded product locally had poor fusibility, edge portions were partially chipped, and surface appearance deteriorated.

Comparative Example 7 contained 0.05 parts by weight of talc and 0.05 parts by weight of silica as foam nucleating agents. This resulted in good surface appearance of the resulted in-mold expanded molded product. However, poor results were obtained in molding cycle and dimensional accuracy of the molded product.

## Claims

1. An expanded polypropylene resin particle comprising a polypropylene resin (X) as a base resin,

    the polypropylene resin (X) containing a polypropylene resin (I) in an amount of 85 to 99 weight% and a high density polyethylene resin (II) in an amount of 1 to 15 weight% so that a total amount of the polypropylene resin (I) and the high density polyethylene resin (II) is 100 weight%, and

    the polypropylene resin (I) having a melt flow rate of 3 g/10min. or more and 20 g/10 min. or less and a melting point of 148°C or above and 160°C or below, and the high density polyethylene resin (II) having a density of 0.93 to 0.97 g/cm$^3$ and a melt flow rate of 0.1 g/10min. or more and 15 g/10min. or less,

    wherein no or one foam nucleating agent is contained in the polypropylene resin (X), wherein a hydrophilic compound is contained in the polypropylene resin (X),

    wherein the expanded polypropylene resin particle has an expansion ratio of 10 times or greater and 40 times or less, an average cell diameter of 100 $\mu$m or greater and 250 $\mu$m or less, and an open cell ratio of 0% or greater and 10% or less, and

    wherein

    the melt flow rate of the polypropylene resin (I) is measured with the use of an MFR measuring instrument described in JIS-K7210 and under conditions involving an orifice having a diameter of 2.0959±0.005 mm and a length of 8.000±0.025 mm, a load of 2160 g, and a temperature of 230°C±0.2°C,

    the melt flow rate of the high density polyethylene resin (II) is measured in accordance with JIS K7210 with a load of 2160 g and a temperature of 190°C±0.2°C,

    the melting point, the expansion ratio, the average cell diameter and the open cell ratio are measured as set out in the specification.

2. The expanded polypropylene resin particle according to claim 1, wherein the melting point of the high density polyethylene resin (II) is 125°C or above and 135°C or below, wherein the melting point is measured as set out in the specification.

3. The expanded polypropylene resin particle according to claim 1 or 2, wherein the melting point of the high density polyethylene resin (II) is 125°C or above and 130°C or below, wherein the melting point is measured as set out in the specification.

4. The expanded polypropylene resin particle according to any one of claims 1 to 3, wherein the high density polyethylene resin (II) has a flexural modulus of 800 MPa or greater and 1600 MPa or less, wherein the flexural modulus is measured as set out in the specification.

5. The expanded polypropylene resin particle according to any one of claims 1 to 4, wherein an amount of the one foam nucleating agent is 0.005 parts by weight or more and 2 parts by weight or less with respect to 100 parts by weight of the polypropylene resin (X).

6. The expanded polypropylene resin particle according to any one of claims 1 to 5, wherein the hydrophilic compound is at least one selected from the group consisting of melamine, glycerin, diglycerin, and polyethylene glycol.

7. A method for producing expanded polypropylene resin particles containing a polypropylene resin (X) as a base resin, the polypropylene resin (X) containing a polypropylene resin (I) in an amount of 85 to 99 weight% and a high density polyethylene resin (II) in an amount of 1 to 15 weight% so that a total amount of the polypropylene resin (I) and the high density polyethylene resin (II) is 100 weight%, and
the polypropylene resin (I) having a melt flow rate of 3 g/10min. or more and 20 g/10min. or less and a melting point of 148°C or above and 160°C or below, and the high density polyethylene resin (II) having a density of 0.93 to 0.97 g/cm$^3$ and a melt flow rate of 0.1 g/10min. or more and 15 g/10min. or less,
wherein no or one foam nucleating agent is contained in the polypropylene resin (X), wherein a hydrophilic compound is contained in the polypropylene resin (X), and
wherein the expanded polypropylene resin particles have an expansion ratio of 10 times or greater and 40 times or less, an average cell diameter of 100 μm or greater and 250 μm or less, and an open cell ratio of 0% or greater and 10% or less,
the method comprising:

obtaining a dispersion slurry by placing water, an inorganic gas-based foaming agent, and polypropylene resin particles composed of the polypropylene resin (X) in a pressure-resistant container and dispersing the polypropylene resin particles with stirring, and increasing temperature and pressure; and thereafter releasing the dispersion slurry from the pressure-resistant container to a region having a pressure lower than an internal pressure of the pressure-resistant container to expand the polypropylene resin particles,
wherein
the melt flow rate of the polypropylene resin (I) is measured with the use of an MFR measuring instrument described in JIS-K7210 and under conditions involving an orifice having a diameter of 2.0959±0.005 mm and a length of 8.000±0.025 mm, a load of 2160 g, and a temperature of 230°C±0.2°C,
the melt flow rate of the high density polyethylene resin (II) is measured in accordance with JIS K7210 with a load of 2160 g and a temperature of 190°C±0.2°C,
the melting point, the expansion ratio, the average cell diameter and the open cell ratio are measured as set out in the specification.

8. The method according to claim 7, wherein the inorganic gas-based foaming agent is carbon dioxide.

9. The method according to any one of claims 7 to 8, wherein the melting point of the high density polyethylene resin (II) is 125°C or above and 135°C or below, wherein the melting point is measured as set out in the specification.

10. The method according to any one of claims 7 to 9, wherein the melting point of the high density polyethylene resin (II) is 125°C or above and 130°C or below, wherein the melting point is measured as set out in the specification.

11. The method according to any one of claims 7 to 10, wherein the high density polyethylene resin (II) has a flexural modulus of 800 MPa or greater and 1600 MPa or less, wherein the flexural modulus is measured as set out in the specification.

12. The method according to any one of claims 7 to 11, wherein an amount of the one foam nucleating agent is 0.005 parts by weight or more and 2 parts by weight or less with respect to 100 parts by weight of the polypropylene resin (X).

13. The method according to any one of claims 7 to 12, wherein the hydrophilic compound is at least one selected from the group consisting of melamine, glycerin, diglycerin, and polyethylene glycol.

14. A polypropylene resin in-mold expanded molded product obtained from the expanded polypropylene resin particle recited in any one of claims 1 to 6,
the polypropylene resin in-mold expanded molded product having a density of 10 g/L or greater and 60 g/L or less and an open cell ratio of 0 to 10%,
wherein the open cell ratio is measured as set out in the specification.

**Patentansprüche**

1. Ein expandiertes Polypropylenharzteilchen, umfassend ein Polypropylenharz (X) als ein Basisharz,
wobei das Polypropylenharz (X) ein Polypropylenharz (I) in einer Menge von 85 bis 99 Gew.-% und ein Polyethylenharz hoher Dichte (II) in einer Menge von 1 bis 15 Gew.-% enthält, sodass eine Gesamtmenge des Polypropylenharzes (I) und des Polyethylenharzes hoher Dichte (II) 100 Gew.-% beträgt, und
wobei das Polypropylenharz (I) eine Schmelzflussrate von 3 g/10 min. oder mehr und 20 g/10 min. oder weniger und einen Schmelzpunkt von 148°C oder darüber und 160°C oder darunter aufweist, und das Polyethylenharz hoher Dichte (II) eine Dichte von 0,93 bis 0,97 g/cm$^3$ aufweist und eine Schmelzflussrate von 0,1 g/10 min. oder mehr und 15 g/10 min. oder weniger aufweist,
wobei kein oder ein Schaumnukleierungsmittel in dem Polypropylenharz (X) enthalten ist,
wobei eine hydrophile Verbindung in dem Polypropylenharz (X) enthalten ist,
wobei das expandierte Polypropylenharzteilchen ein Expansionsverhältnis von 10-mal oder mehr und 40-mal oder weniger, einen durchschnittlichen Zelldurchmesser von 100 $\mu$m oder mehr und 250 $\mu$m oder weniger, und einen Anteil von offenen Zellen von 0% oder mehr und 10% oder weniger aufweist, und
wobei
die Schmelzflussrate des Polypropylenharzes (I) unter Verwendung eines in JIS-K7210 beschriebenen MFR-Messinstruments gemessen wird und unter Bedingungen, die eine Düse mit einem Durchmesser von 2,0959±0,005 mm und einer Länge von 8,000±0,025 mm, eine Belastung von 2160 g und eine Temperatur von 230°C±0,2°C einschließen, die Schmelzflussrate des Polyethylenharzes hoher Dichte (II) gemäß JIS K7210 mit einer Belastung von 2160 g und bei einer Temperatur von 190°C±0,2°C gemessen wird, der Schmelzpunkt, das Expansionsverhältnis, der durchschnittliche Zelldurchmesser und der Anteil von offenen Zellen wie in der Beschreibung festgelegt gemessen werden.

2. Das expandierte Polypropylenharzteilchen nach Anspruch 1, wobei der Schmelzpunkt des Polyethylenharzes hoher Dichte (II) 125°C oder darüber und 135°C oder darunter beträgt, wobei der Schmelzpunkt wie in der Beschreibung festgelegt gemessen wird.

3. Das expandierte Polypropylenharzteilchen nach Anspruch 1 oder 2, wobei der Schmelzpunkt des Polyethylenharzes hoher Dichte (II) 125°C oder darüber und 130°C oder darunter beträgt, wobei der Schmelzpunkt wie in der Beschreibung festgelegt gemessen wird.

4. Das expandierte Polypropylenharzteilchen nach einem der Ansprüche 1 bis 3, wobei das Polyethylenharz hoher Dichte (II) ein Biegemodul von 800 MPa oder mehr und 1600 MPa oder weniger aufweist, wobei das Biegemodul wie in der Beschreibung festgelegt gemessen wird.

5. Das expandierte Polypropylenharzteilchen nach einem der Ansprüche 1 bis 4, wobei eine Menge des einen Schaumnukleierungsmittels 0,005 Gewichtsteile oder mehr und 2 Gewichtsteile oder weniger, bezogen auf 100 Gewichtsteile des Polypropylenharzes (X), beträgt.

6. Das expandierte Polypropylenharzteilchen nach einem der Ansprüche 1 bis 5, wobei die hydrophile Verbindung mindestens eine ist, ausgewählt aus der Gruppe bestehend aus Melamin, Glycerin, Diglycerin und Polyethylenglycol.

7. Ein Verfahren zur Herstellung von expandierten Polypropylenharzteilchen, enthaltend ein Polypropylenharz (X) als ein Basisharz,
wobei das Polypropylenharz (X) ein Polypropylenharz (I) in einer Menge von 85 bis 99 Gew.-% und ein Polyethylenharz hoher Dichte (II) in einer Menge von 1 bis 15 Gew.-% enthält, sodass eine Gesamtmenge des Polypropylenharzes (I) und des Polyethylenharzes hoher Dichte (II) 100 Gew.-% beträgt, und

wobei das Polypropylenharz (I) eine Schmelzflussrate von 3 g/10 min. oder mehr und 20 g/10 min. oder weniger und einen Schmelzpunkt von 148°C oder darüber und 160°C oder darunter aufweist, und das Polyethylenharz hoher Dichte (II) eine Dichte von 0,93 bis 0,97 g/cm$^3$ und eine Schmelzflussrate von 0,1 g/10 min. oder mehr und 15 g/10 min. oder weniger aufweist,

wobei kein oder ein Schaumnukleierungsmittel in dem Polypropylenharz (X) enthalten ist, wobei eine hydrophile Verbindung in dem Polypropylenharz (X) enthalten ist, und wobei die expandierten Polypropylenharzteilchen ein Expansionsverhältnis von 10-mal oder mehr und 40-mal oder weniger, einen durchschnittlichen Zelldurchmesser von 100 μm oder mehr und 250 μm oder weniger und einen Anteil von offenen Zellen von 0% oder mehr und 10% oder weniger aufweisen,

wobei das Verfahren umfasst:

Erhalten einer Dispersionsaufschlämmung durch Platzieren von Wasser, eines anorganischen, auf Gas basierenden Schaumbildners und von Polypropylenharzteilchen, die aus dem Polypropylenharz (X) bestehen, in einen druckfesten Behälter und Dispergieren der Polypropylenharzteilchen durch Rühren und Erhöhen der Temperatur und des Drucks; und anschließend

Freisetzen der Dispersionsaufschlämmung aus dem druckfesten Behälter in einen Bereich mit einem Druck, der niedriger als ein innerer Druck des druckfesten Behälters ist, um die Polypropylenharzteilchen zu expandieren,

wobei

die Schmelzflussrate des Polypropylenharzes (I) unter Verwendung eines in JIS-K7210 beschriebenen MFR-Messinstruments gemessen wird und unter Bedingungen, die eine Düse mit einem Durchmesser von 2,0959±0,005 mm und einer Länge von 8,000±0,025 mm, eine Belastung von 2160 g und eine Temperatur von 230°C±0,2°C einschließen, die Schmelzflussrate des Polyethylenharzes hoher Dichte (II) gemäß JIS K7210 mit einer Belastung von 2160 g und bei einer Temperatur von 190°C±0,2°C gemessen wird, der Schmelzpunkt, das Expansionsverhältnis, der durchschnittliche Zelldurchmesser und der Anteil von offenen Zellen wie in der Beschreibung festgelegt gemessen werden.

8. Das Verfahren nach Anspruch 7, wobei es sich bei dem anorganischen, auf Gas basierenden Schaumbildner um Kohlendioxid handelt.

9. Das Verfahren nach einem der Ansprüche 7 bis 8, wobei der Schmelzpunkt des Polyethylenharzes hoher Dichte (II) 125°C oder darüber und 135°C oder darunter beträgt, wobei der Schmelzpunkt wie in der Beschreibung festgelegt gemessen wird.

10. Das Verfahren nach einem der Ansprüche 7 bis 9, wobei der Schmelzpunkt des Polyethylenharzes hoher Dichte (II) 125°C oder darüber und 130°C oder darunter beträgt, wobei der Schmelzpunkt wie in der Beschreibung festgelegt gemessen wird.

11. Das Verfahren nach einem der Ansprüche 7 bis 10, wobei das Polyethylenharz hoher Dichte (II) ein Biegemodul von 800 MPa oder mehr und 1600 MPa oder weniger aufweist, wobei das Biegemodul wie in der Beschreibung festgelegt gemessen wird.

12. Das Verfahren nach einem der Ansprüche 7 bis 11, wobei eine Menge des einen Schaumnukleierungsmittels 0,005 Gewichtsteile oder mehr und 2 Gewichtsteile oder weniger, bezogen auf 100 Gewichtsteile des Polypropylenharzes (X), beträgt.

13. Das Verfahren nach einem der Ansprüche 7 bis 12, wobei die hydrophile Verbindung mindestens eine ist, ausgewählt aus der Gruppe bestehend aus Melamin, Glycerin, Diglycerin und Polylethylenglycol.

14. Ein in einer Form expandierter Polypropylenharz-Formkörper, erhalten aus dem expandierten Polypropylenharzteilchen, wie in einem der Ansprüche 1 bis 6 genannt, wobei der in einer Form expandierte Polypropylenharz-Formkörper eine Dichte von 10 g/L oder mehr und 60 g/L oder weniger aufweist und ein Anteil von offenen Zellen 0 bis 10% beträgt,

wobei der Anteil von offenen Zellen wie in der Beschreibung festgelegt gemessen wird.

**Revendications**

1. Particule de résine de polypropylène expansée comprenant une résine de polypropylène (X) comme une résine de base,

   la résine de polypropylène (X) contenant une résine de polypropylène (I) dans une quantité de 85 à 99 % en masse et une résine de polyéthylène haute densité (II) dans une quantité de 1 à 15 % en masse de sorte qu'une quantité totale de la résine de polypropylène (I) et de la résine de polyéthylène haute densité (II) soit de 100 % en masse, et la résine de polypropylène (I) ayant un indice d'écoulement à l'état fondu de 3 g/10 min ou supérieur et de 20 g/10 min ou inférieur et un point de fusion de 148°C ou supérieur et de 160°C ou inférieur, et la résine de polyéthylène haute densité (II) ayant une densité de 0,93 à 0,97 g/cm$^3$ et un indice d'écoulement à l'état fondu de 0,1 g/10 min ou supérieur et de 15 g/10 min ou inférieur,

   dans laquelle aucun ou un agent de nucléation de mousse est contenu dans la résine de polypropylène (X),

   dans laquelle un composé hydrophile est contenu dans la résine de polypropylène (X),

   dans laquelle la résine de polypropylène expansée présente un taux d'expansion de 10 fois ou supérieur et de 40 fois ou inférieur, un diamètre moyen d'alvéole de 100 μm ou supérieur et de 250 μm ou inférieur, et un taux d'alvéole ouverte de 0 % ou supérieur et de 10 % ou inférieur, et

   dans laquelle

   l'indice d'écoulement à l'état fondu de la résine de polypropylène (I) est mesuré avec l'utilisation d'un instrument de mesure MFR décrit dans JIS-K7210 et dans des conditions impliquant un orifice ayant un diamètre de 2,0959±0,005 mm et une longueur de 8,000±0,025 mm, une charge de 2 160 g, et une température de 230°C±0,2°C,

   l'indice d'écoulement à l'état fondu de la résine de polyéthylène haute densité (II) est mesuré selon JIS K7210 avec une charge de 2 160 g et une température de 190°C±0,2°C,

   le point de fusion, le taux d'expansion, le diamètre moyen d'alvéole et le taux d'alvéole ouverte sont mesurés comme défini dans la description.

2. Particule de résine de polypropylène expansée selon la revendication 1, dans laquelle le point de fusion de la résine de polyéthylène haute densité (II) est de 125°C ou supérieur et de 135°C ou inférieur, dans laquelle le point de fusion est mesuré comme défini dans la description.

3. Particule de résine de polypropylène expansée selon la revendication 1 ou 2, dans laquelle le point de fusion de la résine de polyéthylène haute densité (II) est de 125°C ou supérieur et de 130°C ou inférieur, dans laquelle le point de fusion est mesuré comme défini dans la description.

4. Particule de résine de polypropylène expansée selon l'une quelconque des revendications 1 à 3, dans laquelle la résine de polyéthylène haute densité (II) présente un module de flexion de 800 MPa ou supérieur et 1600 MPa ou inférieur, dans laquelle le module de flexion est mesuré comme défini dans la description.

5. Particule de résine de polypropylène expansée selon l'une quelconque des revendications 1 à 4, dans laquelle une quantité du un agent de nucléation de mousse est de 0,005 partie en masse ou supérieure et de 2 parties en masse ou inférieure par rapport à 100 parties en masse de la résine de polypropylène (X).

6. Particule de résine de polypropylène expansée selon l'une quelconque des revendications 1 à 5, dans laquelle le composé hydrophile est au moins un choisi dans le groupe consistant en mélamine, glycérine, diglycérine, et polyéthylène glycol.

7. Procédé de production de particules de résine de polypropylène expansées comprenant une résine de polypropylène (X) comme une résine de base,

   la résine de polypropylène (X) contenant une résine de polypropylène (I) dans une quantité de 85 à 99 % en masse et une résine de polyéthylène haute densité (II) dans une quantité de 1 à 15 % en masse de sorte qu'une quantité totale de la résine de polypropylène (I) et de la résine de polyéthylène haute densité (II) soit de 100 % en masse, et la résine de polypropylène (I) ayant un indice d'écoulement à l'état fondu de 3 g/10 min ou supérieur et de 20 g/10 min ou inférieur et un point de fusion de 148°C ou supérieur et de 160°C ou inférieur, et la résine de polyéthylène haute densité (II) ayant une densité de 0,93 à 0,97 g/cm$^3$ et un indice d'écoulement à l'état fondu de 0,1 g/10 min ou supérieur et de 15 g/10 min ou inférieur,

   dans lequel aucun ou un agent de nucléation de mousse est contenu dans la résine de polypropylène (X),

   dans lequel un composé hydrophile est contenu dans la résine de polypropylène (X), et

   dans lequel les particules de résine de polypropylène expansées présentent un taux d'expansion de 10 fois ou supérieur et de 40 fois ou inférieur, un diamètre moyen d'alvéole de 100 μm ou supérieur et de 250 μm ou inférieur, et un taux d'alvéole ouverte de 0 % ou supérieur et de 10 % ou inférieur,
le procédé comprenant :

l'obtention d'une suspension de dispersion en plaçant de l'eau, un agent moussant à base de gaz inorganique, et des particules de résine de polypropylène constituées de la résine de polypropylène (X) dans un récipient résistant à la pression et en dispersant les particules de résine de polypropylène avec agitation, et en augmentant la température et la pression ; et après cela
la libération de la suspension de dispersion du récipient résistant à la pression dans une région ayant une pression inférieure à une pression interne du récipient résistant à la pression pour expanser les particules de résine de polypropylène,
dans lequel
l'indice d'écoulement à l'état fondu de la résine de polypropylène (I) est mesuré avec l'utilisation d'un instrument de mesure MFR décrit dans JIS-K7210 et dans des conditions impliquant un orifice ayant un diamètre de 2,0959±0,005 mm et une longueur de 8,000±0,025 mm, une charge de 2 160 g, et une température de 230°C±0,2°C,
l'indice d'écoulement à l'état fondu de la résine de polyéthylène haute densité (II) est mesuré selon JIS K7210 avec une charge de 2 160 g et une température de 190°C±0,2°C,
le point de fusion, le taux d'expansion, le diamètre moyen d'alvéole et le taux d'alvéole ouverte sont mesurés comme défini dans la description.

8. Procédé selon la revendication 7, dans lequel l'agent moussant à base de gaz inorganique est du dioxyde de carbone.

9. Procédé selon l'une quelconque des revendications 7 à 8, dans lequel le point de fusion de la résine de polyéthylène haute densité (II) est de 125°C ou supérieur et de 135°C ou inférieur, dans lequel le point de fusion est mesuré comme défini dans la description.

10. Procédé selon l'une quelconque des revendications 7 à 9, dans lequel le point de fusion de la résine de polyéthylène haute densité (II) est de 125°C ou supérieur et de 130°C ou inférieur, dans lequel le point de fusion est mesuré comme défini dans la description.

11. Procédé selon l'une quelconque des revendications 7 à 10, dans lequel la résine de polyéthylène haute densité (II) présente un module de flexion de 800 MPa ou supérieur et de 1 600 MPa ou inférieur, dans lequel le module de flexion est mesuré comme défini dans la description.

12. Procédé selon l'une quelconque des revendications 7 à 11, dans lequel une quantité du un agent de nucléation de mousse est de 0,005 partie en masse ou supérieure et de 2 parties en masse ou inférieure par rapport à 100 parties en masse de la résine de polypropylène (X).

13. Procédé selon l'une quelconque des revendications 7 à 12, dans lequel le composé hydrophile est au moins un choisi dans le groupe consistant en mélamine, glycérine, diglycérine, et polyéthylène glycol.

14. Produit moulé expansé dans le moule de résine de polypropylène obtenu à partir de la particule de résine de polypropylène expansée citée dans l'une quelconque des revendications 1 à 6,
le produit moulé expansé dans le moule de résine de polypropylène ayant une densité de 10 g/L ou supérieure et de 60 g/L ou inférieure et un taux d'alvéole ouverte de 0 à 10 %,
dans lequel le taux d'alvéole ouverte est mesuré comme défini dans la description.

## FIG. 1

FIG. 1 DSC CURVE ON EXPANDED POLYPROPYLENE RESIN PARTICLES

## FIG. 2

FIG. 2 DSC CURVE ON EXPANDED POLYPROPYLENE RESIN PARTICLES

EP 3 339 358 B1

FIG. 3

FIG. 3 DSC CURVE ON POLYPROPYLENE RESIN IN SECOND TEMPERATURE RISE

## FIG. 4

FIG. 4 DSC CURVE ON POLYPROPYLENE RESIN IN SECOND TEMPERATURE RISE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009114359 A
- JP 2009084547 A
- JP 2008255286 A

- JP 2010275499 A
- WO 2015098619 A
- JP 2009167236 A